(19) Europäisches Patentamt / European Patent Office / Office européen des brevets

(11) **EP 3 444 113 B1**

(12) **EUROPÄISCHE PATENTSCHRIFT**

(45) Veröffentlichungstag und Bekanntmachung des Hinweises auf die Patenterteilung:
**20.01.2021   Patentblatt 2021/03**

(21) Anmeldenummer: **17186920.9**

(22) Anmeldetag: **18.08.2017**

(51) Int Cl.:
*B32B 27/34* (2006.01)          *B29C 45/14* (2006.01)
*C08K 3/40* (2006.01)           *C08G 69/08* (2006.01)
*C08G 69/14* (2006.01)          *C08G 69/26* (2006.01)
*C08G 69/36* (2006.01)          *C08L 77/00* (2006.01)
*C08L 77/02* (2006.01)          *C08L 77/06* (2006.01)
*C08K 7/14* (2006.01)           *B32B 27/08* (2006.01)
*B32B 27/18* (2006.01)          *B32B 27/20* (2006.01)
*B32B 27/22* (2006.01)          *B32B 7/02* (2019.01)

(54) **VERSTÄRKTE POLYAMID-FORMMASSEN MIT GERINGEM HAZE UND FORMKÖRPER DARAUS**

REINFORCED POLYAMIDE MOULDING COMPOUNDS WITH LOW HAZE AND MOULDS THEREFROM

MATIÈRES À MOULER  EN POLYAMIDE RENFORCÉ À FAIBLE VALEUR HAZE ET CORPS AINSI MOULÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**20.02.2019   Patentblatt 2019/08**

(73) Patentinhaber: **EMS-CHEMIE AG**
**7013 Domat/Ems (CH)**

(72) Erfinder:
• **AEPLI, Etienne**
**7013 Domat/Ems (CH)**

• **HOFFMANN, Botho**
**7013 Domat/Ems (CH)**
• **WIEDEMANN, Thomas**
**7013 Domat/Ems (CH)**
• **HOFF, Heinz**
**7015 Tamins (CH)**

(74) Vertreter: **Pfenning, Meinig & Partner mbB**
**Patent- und Rechtsanwälte**
**Theresienhöhe 11a**
**80339 München (DE)**

(56) Entgegenhaltungen:
**US-A1- 2016 369 098**

**EP 3 444 113 B1**

**Beschreibung**

Die vorliegende Erfindung betrifft mit Glas gefüllte Polyamid-Formmassen mit geringem Haze, daraus hergestellte Formkörper und deren Verwendung.

Aufgrund ihrer sehr guten optischen und mechanischen Kennwerte ist der Einsatz von amorphen oder mikrokristallinen Polyamid-Formmassen für Anwendungen im Bereich von Automobilteilen, Elektronik, optischen Bauteilen, Blenden, Gehäusen, Sichtflächen usw. weit verbreitet.

Um insbesondere Eigenschaften wie die Steifheit, Festigkeit, Verzugsminderung und Oberflächenkratzfestigkeit zu steigern, können den Formmassen faserförmige oder partikuläre Glasfüller zugesetzt werden. Dabei wird regelmäßig eine Verschlechterung der optischen Eigenschaften, insbesondere des Haze und der Transparenz, beobachtet.

Der im Stand der Technik verbreitete Ansatz zur Unterdrückung einer Verschlechterung der optischen Eigenschaften ist die Anpassung des Brechungsindex des Glases an den des Polymers. In EP 2 169 008 A1 wird hierfür ein Glas vorgeschlagen, dessen Bereiche an Netzwerkbildnern, Netzwerkwandlern und Zwischenoxiden so breit gewählt werden kann, dass der Brechungsindex im Bereich von 1,510 bis 1,540 gemessen bei einer Wellenlänge von 589 nm (nD) eingestellt werden kann. Ferner beschreibt die Schrift, dass der für das Glas einzustellende Brechungsindex bei Zugabe des Füllers zum Polymer nicht stärker als 0,002 von dem des Polymers abweichen soll.

WO 2015/132510 A1 betrifft ebenfalls mit Glasfüllern verstärkte, transparente Polyamid-Formmassen. Zur Einstellung des Brechungsindex der ansonsten auf amorphen Polyamiden basierenden Formmassen wird zumindest ein teilkristallines Polyamid in die Polyamid-Formmasse eingebracht. Die in den Beispielen gearbeiteten anspruchsgemäßen Polyamid-Formmassen weisen Glasübergangstemperaturen von maximal 135°C auf. Höhere Glasübergangstemperaturen wurden offenbar nicht gewünscht, da bei der Diskussion des Standes der Technik bereits Probleme mit der Verarbeitung, insbesondere mit Materialabtrag, von Formmassen mit Glasübergangstemperaturen von >150°C thematisiert wurden.

Der Stand der Technik weist erhebliche Nachteile auf, die durch die vorliegende Erfindung verbessert werden sollen. So erfordert die Erstellung eines Glases mit der Genauigkeit eines Brechungsindex von 0,002 einen erheblichen technischen Aufwand hinsichtlich einer möglichst genauen Glaszusammensetzung, der Rohstoffreinheit, einer genauen Schmelzehomogenität und dem anzuwendenden Temperaturregime bei der Glasherstellung, da diese Faktoren Einfluss auf den Brechungsindex des Glases haben. Für Gläser, die nur als Material für Füller dienen und die möglichst kostengünstig produziert werden sollen, ist ein solcher Aufwand wirtschaftlich kaum sinnvoll, wenn jeweils für ein bestimmtes Polyamid mit einem bestimmten Brechungsindex ein neues Glas erstellt werden muss.

Abhängig von den Anforderungen einer gegeben Anwendung, besteht häufig die Notwendigkeit die Komponenten einer Polymermatrix zu variieren, um ein bestimmtes Eigenschaftsprofil zu erreichen. Dadurch ändert sich aber auch regelmäßig der Brechungsindex des Polymers, wodurch jeweils ein darauf angepasstes Glas mit dem beschriebenen Aufwand erstellt werden müsste, um verstärkte Formmassen mit guten optischen Eigenschaften zu erhalten.

Es besteht daher ein Bedarf mit geringem Aufwand ein Matrixpolymer so modifizieren zu können, dass dieses trotz der Einarbeitung eines Glasfüllers gute optische Eigenschaften, insbesondere geringen Haze und hohe Transparenz, beibehält.

Die vorliegende Erfindung verfolgt die Aufgabenstellung eine mit einem Glasfüller mit relativ hohem Brechungsindex, insbesondere im Bereich von 1,540 bis 1,600, verstärkte Polyamid-Formmasse auf Basis von transparenten Polyamiden bereitzustellen. Dabei soll die Polyamid-Formmasse eine gute Transparenz und einen niedrigen Haze-Wert bei gleichzeitig guten mechanischen Eigenschaften aufweisen. Ebenso war es Aufgabe der vorliegenden Erfindung Polyamid-Formmassen mit hoher Wärmeformbeständigkeit bereitzustellen, ohne dass die Verarbeitungseigenschaften verschlechtert werden.

Diese Aufgabe wird durch die Polyamid-Formmassen gemäß Anspruch 1 gelöst, welche die folgenden Komponenten enthalten oder aus diesen Komponenten bestehen:

(A) 50 bis 95 Gew.-% einer Mischung bestehend aus den Polyamiden (A1) und (A2), wobei

(A1) mindestens ein transparentes, teilaromatisches Polyamid mit mehr als 35 Mol-% an Monomeren mit aromatischen Struktureinheiten, bezogen auf die Gesamtmenge an Diaminen und Dicarbonsäuren im Polyamid (A1), ist, welches amorph oder mikrokristallin ist; und
(A2) mindestens ein transparentes, teilaromatisches Polyamid mit höchstens 35 Mol-% an Monomeren mit aromatischen Struktureinheiten, bezogen auf die Gesamtmenge an Diaminen und Dicarbonsäuren im Polyamid (A2), ist, welches amorph oder mikrokristallin ist;

(B) 5 bis 50 Gew.-% mindestens eines Glasfüllers mit Brechungsindex im Bereich von 1,540 bis 1,600;
(C) 0 bis 10 Gew.-% mindestens eines Zusatzstoffes.

Dabei sind die folgenden Maßgaben zu erfüllen:

- Die Gewichtsanteile der Komponenten (A) bis (C) ergänzen sich auf 100 Gew.-%.
- Die Gewichtsanteile der Komponenten (A1) und (A2) ergänzen sich auf 100 Gew.-% der Komponente (A).
- Der Gehalt an (A1) in der Mischung (A) ist > 50 Gew.-%, falls das Verhältnis $\Delta2/\Delta1 > 1$ ist und der Gehalt an (A2) in der Mischung (A) ist > 50 Gew.-% ist, falls das Verhältnis $\Delta2/\Delta1 \leq 1$ ist (wobei gilt, dass $\Delta1 = n(A1) - n(B)$ ist und $\Delta2 = n(B) - n(A2)$ ist.)

- Die transparenten Polyamide (A1) und (A2) weisen eine Transpararenz von mindestens 90 % und einen Haze von höchstens 3% auf.

- Die Mischung (A) weist eine Transparenz von mindestens 88 % und einen Haze von höchstens 5 % auf.

Vorteilhafte Ausführungsformen der erfindungsgemäßen Polyamid-Formmasse sind in den abhängigen Ansprüchen 2 bis 15 angegeben.

Weiterhin betrifft die vorliegende Erfindung gemäß Anspruch 16 Formkörper, welche die erfindungsgemäße Polyamid-Formmasse enthalten und bevorzugt aus dieser bestehen. Diese Formkörper sind insbesondere ausgewählt aus der Gruppe bestehend aus Komponenten von Mobiltelefonen, Tablets, Gehäusen von elektronischen Geräten, Dekorteilen in Fahrzeugen und Haushalt, Abdeckungen, Sichtflächen, hinterleuchtete Komponenten, Blenden, Behältern, Fahrzeugschlüsseln und Freizeit- und Outdoorartikeln.

Bevorzugte Ausführungsformen dieser Formkörper werden in den Ansprüchen 17 und 18 angegeben.

Begriffsdefinitionen

Schreibweisen und Abkürzungen für Polyamide und deren Monomere

Im Sinne der vorliegenden Erfindung wird unter dem Begriff "Polyamid" (Abkürzung PA) ein Oberbegriff verstanden, dieser umfasst Homopolyamide und Copolyamide. Die gewählten Schreibweisen und Abkürzungen für Polyamide und deren Monomere entsprechen den in der ISO-Norm 16396-1 (2015(D)) festgelegten. Die darin verwendeten Abkürzungen werden im folgenden Synonym zu den IUPAC Namen der Monomere verwendet, insbesondere kommen folgende Abkürzungen für Monomere vor: MACM für Bis(4-amino-3-methyl-cyclohexyl)methan (auch als 3,3'-Dimethyl-4,4'-diaminodicyclohexylmethan bezeichnet, CAS-Nr. 6864-37-5), PACM für Bis(4-amino-cyclohexyl)methan (auch als 4,4'-Diaminodicyclohexylmethan bezeichnet, CAS-Nr. 1761-71-3), TMDC für Bis(4-amino-3,5-dimethylcyclohexyl)methan (auch als 3,3',5,5'-Tetramethyl-4,4'-diaminodicyclohexylmethan bezeichnet, CAS-Nr. 65962-45-0), T für Terephthalsäure (CAS-Nr. 100-21-0), I für Isophthalsäure (CAS-Nr. 121-95-5), BAC für 1,4-Bis(aminomethyl)cyclohexan (CAS-Nr. 2549-93-1).

Mengenangaben

Die Polyamid-Formmassen gemäß der vorliegenden Erfindung enthalten die Komponenten (A) bis (C) oder bestehen bevorzugt ausschließlich aus den Komponenten (A) bis (C). Es gilt dabei die Maßgabe, dass sich die Komponenten (A) bis (C) in Summe auf 100 Gew.-% ergänzen. Die festgelegten Bereiche der Mengenangaben für die einzelnen Komponenten (A) bis (C) sind so zu verstehen, dass innerhalb der vorgegebenen Bereiche eine willkürliche Menge für jede der Einzelkomponenten ausgewählt werden kann, sofern die strikte Maßgabe erfüllt wird, dass die Summe aller Komponenten (A) bis (C) 100 Gew.-% ergibt.

Amorphe oder mikrokristalline Polyamide

Amorphe oder mikrokristalline Polyamide zeigen in der dynamischen Differenz-Kalorimetrie (engl. Differential Scanning Calorimetry, DSC) nach ISO 11357 (2013) bei einer Aufheizrate von 20 K/min bevorzugt eine Schmelzwärme von maximal 25 J/g, besonders bevorzugt von maximal 22 J/g, ganz besonders bevorzugt 0 bis 20 J/g.

Mikrokristalline Polyamide besitzen neben einer Glasübergangstemperatur auch einen Schmelzpunkt. Sie haben jedoch eine Morphologie, bei der die Kristallite eine so kleine Dimension haben, dass eine daraus hergestellte Platte mit einer Dicke von 2 mm noch transparent ist, d.h. ihre Lichttransmission mindestens 90 % und ihr Haze höchstens 3 % beträgt, gemessen nach ASTM D 1003-13 (2013).

Amorphe Polyamide weisen verglichen mit den mikrokristallinen Polyamiden keine oder nur eine sehr geringe, kaum nachweisbare Schmelzwärme, auf. Die amorphen Polyamide zeigen in der dynamischen Differenz-Kalorimetrie (engl. Differential Scanning Calorimetry, DSC) nach ISO 11357 (2013) bei einer Aufheizrate von 20 K/min bevorzugt eine Schmelzwärme von maximal 5 J/g, besonders bevorzugt von maximal 3 J/g, ganz besonders bevorzugt von 0 bis 1 J/g.

Amorphe Polyamide besitzen auf Grund ihrer Amorphizität keinen Schmelzpunkt.

Im Sinne der Erfindung sind teilkristalline Polyamide solche Polyamide, die in der dynamischen Differenz-Kalorimetrie (engl. Differential Scanning Calorimetry, DSC) nach ISO 11357 (2013) bei einer Aufheizrate von 20 K/min bevorzugt eine Schmelzwärme von mehr als 25 J/g, besonders bevorzugt von wenigstens 35 J/g, ganz besonders bevorzugt von wenigstens 40 J/g aufweisen. Eine aus teilkristallinen Polyamiden hergestellte Platte mit einer Dicke von 2 mm ist nicht transparent, d.h. ihre Lichttransmission liegt unter 90 % und/oder ihr Haze über 3 %, jeweils gemessen nach ASTM D 1003-13 (2013).

## Transparente Polyamide

Im Sinne der vorliegenden Erfindung liegt ein transparentes Polyamid vor, wenn dessen nach ASTM D 1003-13 (2013) an Platten mit einer Dicke von 2 mm gemessene Lichttransmission mindestens 90 % und dessen Haze höchstens 3 % beträgt. Wenn im Folgenden von transparenten Polyamiden gesprochen wird, sind stets amorphe oder mikrokristalline Polyamide gemeint, die die obige Definitionen bezüglich Transparenz und Schmelzwärme erfüllen.

## Haze, Transparenz

Der Haze beschreibt das Streuverhalten eines Stoffes, die Transparenz die Lichttransmission durch den Stoff. Im Rahmen der vorliegenden Erfindung wird unter dem Haze bzw. der Transparenz der an einem aus der Polyamid-Formmasse hergestellten Formkörper (2 mm dicke Platten mit Breite und Länge: 60 x 60 mm) nach ASTM D1003 auf einem Messgerät Haze Gard Plus der Firma BYK Gardner mit CIE Lichtart C bei 23 °C gemessene Haze bzw. Transparenz (Gesamttransmission) verstanden.

## Brechungsindex

Der Brechungsindex wird in den Formeln und im experimentellen Teil mit "n" abgekürzt. Im Hinblick auf den Glasfüller, insbesondere Glasfasern, wird immer der Brechungsindex gemessen bei einer Wellenlänge von 589 nm angegeben. Die Bestimmung des Brechungsindex von Glasfüllern, insbesondere von Glasfasern, erfolgte mit der Methode der Beckeschen Linie und unter Verwendung von Immersionsflüssigkeiten bezogen auf 589 nm in Anlehnung an Methode B der ISO 489(1999-04). Der Brechungsindex der Polyamide (A1) und (A2) wurde an 2 mm dicken Platten (60 x 60 x 2 mm) bei einer Wellenlänge von 589 nm und 23°C mittels eines Abbe-Refraktometers der Firma Carl Zeiss gemäss Methode A der ISO 489 (1999-04) bestimmt. Als Kontaktflüssigkeit wurde 1-Bromnaphthalin verwendet.

## Komponente (A)

Die erfindungsgemäße Polyamid-Formmasse enthält 50 bis 95 Gew.-% der Komponente (A), bezogen auf die Summe der Komponenten (A) bis (C), wobei es sich um eine Mischung bestehend aus den Polyamiden (A1) und (A2) handelt. Die Gewichtsanteile der Komponenten (A1) und (A2) ergänzen sich dabei auf 100 Gew.-% der Komponente (A). (A1) ist dabei mindestens ein transparentes, teilaromatisches Polyamid mit mehr als 35 Mol-% an Monomeren mit aromatischen Struktureinheiten, bezogen auf die Gesamtmenge an Diaminen und Dicarbonsäuren im Polyamid (A1) und ist amorph oder mikrokristallin. (A2) ist mindestens ein transparentes, teilaromatisches Polyamid mit höchstens 35 Mol-% an Monomeren mit aromatischen Struktureinheiten, bezogen auf die Gesamtmenge an Diaminen und Dicarbonsäuren im Polyamid (A2) und ist amorph oder mikrokristallin. Insbesondere sind die Polyamide (A1) und (A2) amorph.

Der Anteil der Komponenten (A1) in der Mischung (A) ist größer als 50 Gew.-% wenn die folgende Bedingung erfüllt ist:

$$\Delta2/\Delta1 > 1$$

Der Anteil der Komponenten (A2) in der Mischung (A) ist größer als 50 Gew.-% wenn die folgende Bedingung erfüllt ist:

$$\Delta2/\Delta1 \leq 1$$

Dabei gilt, dass

$$\Delta 1 = n\,(A1) - n(B)$$

und

$$\Delta 2 = n(B) - n(A2),$$

wobei, n (A1) für den Brechungsindex der Komponente A1 steht,
n (A2) für den Brechungsindex der Komponente A2 steht, und
n (B) für den Brechungsindex des Glasfüllers steht.

Weiterhin gelten die Maßgaben, dass die transparenten Polyamide (A1) und (A2) eine Transparenz von mindestens 90 % und einen Haze von höchstens 3 % aufweisen und dass die Mischung (A) eine Transpararenz von mindestens 88 % und einen Haze von höchstens 5 % aufweist.

Im Folgenden werden bevorzugte Ausführungsformen der Komponente (A) ausgeführt.

Gemäß einer bevorzugten Ausführungsform der vorliegenden Erfindung ist die Komponente (A1) oder die Komponente (A2) amorph, besonders bevorzugt sind beide Komponenten amorph.

Nach einer bevorzugten Ausführungsform der vorliegenden Erfindung liegt der Anteil von Komponente (A) in der Polyamid-Formmasse im Bereich von 55 bis 90 Gew.-%, besonders bevorzugt 60 bis 85 Gew.-% und insbesondere bevorzugt 62 bis 84,9 Gew.%, bezogen auf das Gesamtgewicht der Polyamid-Formmasse.

Eine andere bevorzugte Ausführungsform der vorliegenden Erfindung sieht vor, dass die Polyamidmischung (A) aus 51 bis 95 Gew.-%, bevorzugt aus 55 bis 90 Gew.-% und insbesondere 60 bis 85 Gew.-% Polyamid (A1) und aus 5 bis 49 Gew.-%, besonders bevorzugt aus 10 bis 45 Gew.-% und insbesondere aus 15 bis 40 Gew.-% Polyamid (A2) besteht, falls $\Delta 2/\Delta 1 > 1$ ist. Bevorzugt setzt sich die Polymermischung (A) abhängig vom Verhältnis $\Delta 2/\Delta 1$ im Bereich $\Delta 2/\Delta 1 > 1$ wie folgt zusammen:

| $\Delta 2/\Delta 1$ | (A1) [Gew.-%] | (A2) [Gew.-%] |
|---|---|---|
| 1,01 bis 1,25 | 51 bis 60 | 40 bis 49 |
| 1,26 bis 1,69 | 61 bis 71 | 29 bis 39 |
| 1,70 bis 2,30 | 72 bis 82 | 18 bis 28 |
| 2,31 bis 20 | 83 bis 95 | 5 bis 17 |

Gemäß einer anderen bevorzugten Ausführungsform vorliegender Erfindung besteht die Polyamidmischung (A) aus 51 bis 95 Gew.-%, bevorzugt aus 55 bis 90 Gew.-% und insbesondere aus 60 bis 85 Gew.-% Polyamid (A2) und aus 5 bis 49 Gew.-%, bevorzugt aus 10 bis 45 Gew.-% und insbesondere aus 15 bis 40 Gew.-% Polyamid (A1), falls $\Delta 2/\Delta 1 \le 1$ ist.

Bevorzugt setzt sich die Polymermischung (A) abhängig vom Verhältnis $\Delta 2/\Delta 1$ im Bereich $\Delta 2/\Delta 1 \le 1$ wie folgt zusammen:

| $\Delta 2/\Delta 1$ | (A1) | (A2) |
|---|---|---|
| 0,71 bis 1,00 | 41 bis 49 | 51 bis 59 |
| 0,29 bis 0,70 | 24 bis 40 | 60 bis 76 |
| 0,05 bis 0,28 | 5 bis 23 | 77 bis 95 |

Weiterhin wird bevorzugt, dass $\Delta 1$ und $\Delta 2$ gleich oder grösser als 0,003 sind, besonders bevorzugt im Bereich von 0,003 bis 0,03 liegen und insbesondere bevorzugt im Bereich von 0,0035 bis 0,025 liegen.

Gemäß einer weiteren bevorzugten Ausführungsform der vorliegenden Erfindung sind die transparenten Polyamide (A1) aus den folgenden Monomeren aufgebaut:

(a-A1) 10 bis 100 Mol-% an cycloaliphatischen Diaminen, bezogen auf die Gesamtmenge an Diaminen;
(b-A1) 0 bis 90 Mol-% an Diaminen mit aromatischen Struktureinheiten, bezogen auf die Gesamtmenge an Diaminen;
(c-A1) 0 bis 90 Mol-% an offenkettigen, aliphatischen Diaminen, bezogen auf die Gesamtmenge an Diaminen;

(d-A1) 0 bis 65 Mol-% an offenkettigen, aliphatischen Dicarbonsäuren, bezogen auf die Gesamtmenge an Dicarbonsäuren;

(e-A1) 35 bis 100 Mol-% an aromatischen Dicarbonsäuren, bezogen auf die Gesamtmenge an Dicarbonsäuren;

(f-A1) 0 bis 65 Mol-% an cycloaliphatischen Dicarbonsäuren, bezogen auf die Gesamtmenge an Dicarbonsäuren;

(g-A1) 0 bis 40 Gew.-% an Lactamen und/oder Aminocarbonsäuren mit 6 bis 12 Kohlenstoffatomen, bezogen auf die Gesamtmenge der Monomere (a-A1) bis (g-A1);

wobei die Summe der Diamine (a-A1), (b-A1) und (c-A1) 100 Mol-% ergibt; wobei die Summe der Dicarbonsäuren (d-A1), (e-A1) und (f-A1) 100 Mol-% ergibt; und wobei die Summe der Monomeren (b-A1) und (e-A1) mehr als 35 Mol-%, bezogen auf die Summe der gesamten Diamine und der gesamten Dicarbonsäuren im Polyamid (A1), beträgt. Besonders bevorzugt liegt der Gehalt an aromatischen Dicarbonsäuren (e-A1) im Bereich von 72 bis 100 Mol-%, der Gehalt der offenkettigen, aliphatischen Dicarbonsäuren (d-A1) im Bereich von 0 bis 28 Mol-% und der Gehalt an cycloaliphatischen Dicarbonsäuren (f-A1) im Bereich von 0 bis 28 Mol-%, jeweils bezogen auf die Gesamtmenge an Dicarbonsäuren. Ganz besonders bevorzugt ist (A1) frei an cycloaliphatischen Dicarbonsäuren (f-A1). Weiterhin bevorzugt liegt der Gehalt an cycloaliphatischen Diaminen (a-A1) im Bereich von 10 bis 50 Mol-%, der Gehalt der offenkettigen, aliphatischen Diaminen (c-A1) im Bereich von 50 bis 90 Mol-% und der Gehalt an cycloaliphatischen Diaminen (b-A1) im Bereich von 0 bis 40 Mol-%, jeweils bezogen auf die Gesamtmenge an Diaminen. Ganz besonders bevorzugt ist (A1) frei von Diaminen (b-A1).

Nach einer anderen bevorzugten Ausführungsform der vorliegenden Erfindung enthält das transparente Polyamid (A1) wenigstens 36 Mol-%, bevorzugt wenigstens 37 Mol-%, insbesondere wenigstens 40 Mol-%, besonders bevorzugt im Bereich von 36 bis 100 Mol-% oder 37 bis 80 Mol-% oder 40 bis 60 Mol-% an Monomeren mit aromatischen Struktureinheiten, bezogen auf die Gesamtmenge an Diaminen und Dicarbonsäuren im Polyamid (A1).

Eine andere bevorzugte Ausführungsform vorliegender Erfindung sieht vor, dass die transparenten Polyamide (A2) aus den folgenden Monomeren aufgebaut sind:

(a-A2) 20 bis 100 Mol-% an cycloaliphatischen Diaminen, bezogen auf die Gesamtmenge an Diaminen;

(b-A2) 0 bis 70 Mol-% an Diaminen mit aromatischen Struktureinheiten, bezogen auf die Gesamtmenge an Diaminen;

(c-A2) 0 bis 80 Mol-% an offenkettigen, aliphatischen Diamine, bezogen auf die Gesamtmenge an Diaminen;

(d-A2) 20 bis 100 Mol-% an offenkettigen, aliphatischen Dicarbonsäuren, bezogen auf die Gesamtmenge an Dicarbonsäuren;

(e-A2) 0 bis 70 Mol-% an aromatischen Dicarbonsäuren, bezogen auf die Gesamtmenge an Dicarbonsäuren;

(f-A2) 0 bis 80 Mol-% an cycloaliphatischen Dicarbonsäuren, bezogen auf die Gesamtmenge an Dicarbonsäuren;

(g-A2) 0 bis 40 Gew.-% Lactame und/oder Aminocarbonsäuren mit 6 bis 12 Kohlenstoffatomen, bezogen auf die Gesamtmenge der Monomere (a-A2) bis (g-A2);

wobei die Summe der Diamine (a-A2), (b-A2) und (c-A2) 100 Mol-% ergibt; wobei die Summe der Dicarbonsäuren (d-A2), (e-A2) und (f-A2) 100 Mol-% ergibt; und wobei die Summe der Monomeren (b-A2) und (e-A2) höchstens 35 Mol-%, bezogen auf die Summe der gesamten Diamine und der gesamten Dicarbonsäuren im Polyamid (A2), beträgt. Besonders bevorzugt liegt der Gehalt an offenkettigen, aliphatischen Dicarbonsäuren (d-A2) im Bereich von 30 bis 70 Mol-% und der Gehalt an aromatischen Dicarbonsäuren (e-A2) im Bereich von 30 bis 70 Mol-%, jeweils bezogen auf die Gesamtmenge an Dicarbonsäuren, wobei (A2) frei ist an Dicarbonsäuren (f-A2). Weiterhin ist besonders bevorzugt, wenn der Gehalt an cycloaliphatischen Diaminen (a-A2) im Bereich von 25 bis 75 Mol-% und der Gehalt an offenkettigen, aliphatischen Diaminen (c-A2) im Bereich von 25 bis 75 Mol-%, jeweils bezogen auf die Gesamtmenge an Diaminen liegt, wobei (A2) frei ist an Diaminen (b-A2) sowie bevorzugt frei ist an Lactamen und/oder Aminocarbonsäuren (g-A2).

Nach einer weiteren bevorzugten Ausführungform der vorliegenden Erfindung enthält das transparente Polyamid (A2) höchstens 33 Mol-%, bevorzugt höchstens 32 Mol-%, insbesondere höchstens 31 Mol-%, besonders bevorzugt im Bereich von 0 bis 33 Mol-% oder 10 bis 32 Mol-% oder 15 bis 31 Mol-% an Monomeren mit aromatischen Struktureinheiten, bezogen auf die Gesamtmenge an Diaminen und Dicarbonsäuren im Polyamid (A2).

Gemäß einer anderen bevorzugten Ausführungsform vorliegender Erfindung sind die Monomere mit aromatischen Struktureinheiten für die transparenten Polyamide (A1) und (A2) ausgewählt aus der Gruppe bestehend aus Terephthalsäure, Isophthalsäure, Naphthalindicarbonsäure (NDA), insbesondere 1,5-Naphthalindicarbonsäure und 2,6-Naphthalindicarbonsäure, Biphenyldicarbonsäuren, insbesondere Biphenyl-2,2'-dicarbonsäure (Diphensäure), 4,4'-Diphenyldicarbonsäure, 3,3'-Diphenyldicarbonsäure, 4,4'-Diphenyletherdicarbonsäure, 4,4'-Diphenylmethandicarbonsäure und 4,4'-Diphenylsulfondicarbonsäure, 1,5-Anthracendicarbonsäure, p-Terphenylen-4,4"-dicarbonsäure und 2,5-Pyridindicarbonsäure, Xylylendiamin, insbesondere meta-Xylylendiamin und para-Xylylendiamin, und Mischungen davon.

Eine weitere bevorzugte Ausführungsform der vorliegenden Erfindung sieht vor, dass die Monomere mit aromatischen Struktureinheiten für die transparenten Polyamide (A1) und (A2) ausschließlich aus der Gruppe bestehend aus Terephthalsäure, Isophthalsäure, 1,5-Naphthalindicarbonsäure, 2,6-Naphthalindicarbonsäure und meta-Xylylendiamin und Mischungen hiervon ausgewählt sind.

Eine andere bevorzugte Ausführungsform der vorliegenden Erfindung sieht vor, dass die Polyamid-Formmasse genau ein Polyamid (A1) enthält. Nach einer weiteren bevorzugten Ausführungsform der vorliegenden Erfindung enthält die Polyamid-Formmasse genau ein Polyamid (A2). Besonders bevorzugt ist es, dass die Polyamid-Formmasse genau ein Polyamid (A1) und genau ein Polyamid (A2) enthält.

Eine andere bevorzugte Ausführungsform der vorliegenden Erfindung sieht vor, dass das cycloaliphatische Diamin (a-A1) und/oder (a-A2) ausgewählt ist aus der Gruppe bestehend aus Bis-(4-amino-3-methyl-cyclohexyl)-methan (MACM), Bis-(4-amino-cyclohexyl)-methan (PACM), Bis-(4-amino-3-ethyl-cyclohexyl)-methan, Bis-(4-amino-3,5-dimethyl-cyclohexyl)-methan, 2,6-Norbornandiamin (2,6-Bis-(aminomethyl)-norbornan), 1,3-Diaminocyclohexan, 1,4-Diaminocyclohexandiamin, Isophorondiamin, 1,3-Bis-(aminomethyl)cyclohexan, 1,4-Bis-(aminomethyl)cyclohexan, 2,2-(4,4'-Diaminodicyclohexyl)propan und Mischungen daraus. Besonders bevorzugt sind die cycloaliphatischen Diamine (a-A1) und/oder (a-A2) ausgewählt aus der Gruppe bestehend aus Bis-(4-amino-3-methyl-cyclohexyl)-methan (MACM) und Bis(4-amino-cyclohexyl)methan (PACM) und Mischungen hiervon.

Nach einer anderen bevorzugten Ausführungsform der vorliegenden Erfindung ist das aromatische Diamin (b-A1) und/oder (b-A2) ausgewählt aus der Gruppe bestehend aus Xylylendiamin, insbesondere meta-Xylylendiamin und para- Xylylendiamin und Mischungen daraus. Besonders bevorzugt sind die Diamine mit aromatischen Struktureinheiten (b-A1) und/oder (b-A2) ausgewählt als meta-Xylylendiamin.

Gemäß einer anderen bevorzugten Ausführungsform ist das Diamin (c-A1) und/oder (c-A2) ausgewählt aus der Gruppe bestehend aus 1,4-Butandiamin, 1,5-Pentandiamin, 2-Methyl-1,5-pentandiamin, Hexandiamin, insbesondere 1,6-Hexandiamin, 2,2,4-Trimethyl-1,6-hexamethylendiamin, 2,4,4-Trimethyl-1,6-hexamethylendiamin, Nonandiamin, insbesondere 1,9-Nonandiamin, 2-Methyl-1,8-octandiamin, 1,10-Decandiamin, 1,11-Undecandiamin, 1,12-Dodecandiamin, 1,13-Tridecandiamin, 1,14-Tetradecandiamin, 1,18-Octadecandiamin, und Mischungen daraus. Besondere bevorzugt sind die offenkettigen, aliphatischen Diamine (c-A1) und/oder (c-A2) ausgewählt aus der Gruppe bestehend aus Diaminen mit 6 bis 10 Kohlenstoffatomen, insbesondere 1,6-Hexandiamin, 1,9-Nonandiamin, 1,10-Decandiamin und Mischungen hiervon.

Eine weitere bevorzugte Ausführungsform der vorliegenden Erfindung sieht vor, dass die aliphatische Dicarbonsäure (d-A1) und/oder (d-A2) ausgewählt ist aus der Gruppe bestehend aus 1,6-Hexandisäure, 1,9-Nonandisäure, 1,10-Decandisäure, 1,11-Undecandisäure, 1,12-Dodecandisäure, 1,13-Tridecandisäure, 1,14-Tetradecandisäure, 1,16-Hexadecandisäure, 1,18-Octadecandisäure, und Mischungen daraus. Besonders bevorzugt sind die offenkettigen, aliphatischen Dicarbonsäuren (d-A1) und/oder (d-A2) ausgewählt aus der Gruppe bestehend aus Dicarbonsäuren mit 6 bis 12 Kohlenstoffatomen, insbesondere 1,6-Hexandisäure, 1,10-Decandisäure, 1,12-Dodecandisäure, und Mischungen hiervon.

Nach einer weiteren bevorzugten Ausführungsform der vorliegenden Erfindung ist die aromatische Dicarbonsäure (e-A1) und/oder (e-A2) ausgewählt aus der Gruppe bestehend aus Terephthalsäure, Isophthalsäure, Naphthalindicarbonsäuren (NDA), insbesondere 1,5-Naphthalindicarbonsäure und 2,6-Naphthalindicarbonsäure, Biphenyldicarbonsäuren, insbesondere Biphenyl-2,2'-dicarbonsäure, 4,4'-Diphenyldicarbonsäure, 3,3'-Diphenyldicarbonsäure, 4,4'-Diphenyletherdicarbonsäure, 4,4'-Diphenylmethandicarbonsäure und 4,4'-Diphenylsulfondicarbonsäure, 1,5-Anthracendicarbonsäure, p-Terphenylen-4,4"-dicarbonsäure und 2,5-Pyridindicarbonsäure und Mischungen davon. Besonders bevorzugt sind die aromatischen Dicarbonsäuren (e-A1) und/oder (e-A2) ausgewählt sind aus der Gruppe bestehend aus Terephthalsäure, Isophthalsäure und Mischungen hiervon.

Eine weitere bevorzugte Ausführungsform der vorliegenden Erfindung sieht vor, dass die cycloaliphatische Dicarbonsäure (f-A1) und/oder (f-A2) ausgewählt ist aus der Gruppe bestehend aus 1,3-Cyclopentandicarbonsäure, 1,3-Cyclohexandicarbonsäure, 1,4-Cyclohexandicarbonsäure, 2,3-Norbornandicarbonsäure, 2,6-Norbornandicarbonsäure und Mischungen daraus. Besonders bevorzugt sind die cycloaliphatischen Dicarbonsäuren (f-A1) und/oder (f-A2) ausgewählt aus der Gruppe bestehend aus 1,3-Cyclohexandicarbonsäure und 1,4-Cyclohexandicarbonsäure und Mischungen hiervon.

Nach einer weiteren bevorzugten Ausführungsform der vorliegenden Erfindung ist das Lactam und/oder sind die $\alpha,\omega$-Aminocarbonsäuren (g-A1) und/oder (g-A2) ausgewählt aus der Gruppe bestehend aus m-Aminobenzoesäure, p-Aminobenzoesäure, Caprolactam (CL), $\alpha,\omega$-Aminocapronsäure, $\alpha,\omega$-Aminoheptansäure, $\alpha,\omega$-Aminoctansäure, $\alpha,\omega$-Aminononansäure, $\alpha,\omega$-Aminodecansäure, $\alpha,\omega$-Aminoundecansäure (AUA), Laurinlactam (LL) und $\alpha,\omega$-Aminododecansäure (ADA), besonderes bevorzugt sind Caprolactam, $\alpha,\omega$-Aminocapronsäure, Laurinlactam, $\alpha,\omega$-Aminoundecansäure und $\alpha,\omega$-Aminododecansäure und Mischungen daraus. Bevorzugt sind die sind die Lactame und/oder Aminocarbonsäuren (g-A1) und/oder (g-A2) ausgewählt aus der Gruppe bestehend aus Caprolactam, Aminocapronsäure, Aminoundecansäure, Laurinlactam und Aminododecansäure und Mischungen hiervon.

Eine weitere bevorzugte Ausführungform der vorliegenden Erfindung sieht vor, dass das cycloaliphatische Diamin (a-A1) und/oder (a-A2) ausgewählt ist aus der Gruppe bestehend aus Bis-(4-amino-3-methyl-cyclohexyl)-methan, Bis-(4-amino-cyclohexyl)-methan, Bis-(4-amino-3-ethyl-cyclohexyl)-methan, Bis-(4-amino-3,5-dimethyl-cyclohexyl)-methan, 2,6-Norbornandiamin, 1,3-Diaminocyclohexan, 1,4-Diaminocyclohexandiamin, Isophorondiamin, 1,3-Bis-(aminomethyl)cyclohexan, 1,4-Bis-(aminomethyl)cyclohexan, 2,2-(4,4'-Diaminodicyclohexyl)propan und Mischungen daraus und das aromatische Diamin (b-A1) und/oder (b-A2) ausgewählt ist aus der Gruppe bestehend aus Xylylendiamin, insbesondere meta-Xylylendiamin und para- Xylylendiamin und Mischungen daraus und das Diamin (c-A1) und/oder (c-A2) ausgewählt ist aus der Gruppe bestehend aus Hexandiamin, insbesondere 1,6-Hexandiamin, Nonandiamin, insbesondere 1,9-Nonandiamin, 1,10-Decandiamin, 1,11-Undecandiamin, 1,12-Dodecandiamin, 1,13-Tridecandiamin, 1,14-Tetradecandiamin, 1,18-Octadecandiamin, und Mischungen daraus und die aliphatische Dicarbonsäure (d-A1) und/oder (d-A2) ausgewählt ist aus der Gruppe bestehend aus 1,6-Hexandisäure, 1,9-Nonandisäure, 1,10-Decandisäure, 1,11-Undecandisäure, 1,12-Dodecandisäure, 1,13-Tridecandisäure, 1,14-Tetradecandisäure, 1,16-Hexadecandisäure, 1,18-Octadecandisäure, und Mischungen daraus und die aromatische Dicarbonsäure (e-A1) und/oder (e-A2) ausgewählt ist aus der Gruppe bestehend aus Terephthalsäure, Isophthalsäure, Naphthalindicarbonsäuren (NDA), insbesondere 1,5-Naphthalindicarbonsäure und 2,6-Naphthalindicarbonsäure, Biphenyldicarbonsäuren, insbesondere Biphenyl-2,2'-dicarbonsäure, 4,4'-Diphenyldicarbonsäure, 3,3'-Diphenyldicarbonsäure, 4,4'-Diphenyletherdicarbonsäure, 4,4'-Diphenylmethandicarbonsäure und 4,4'-Diphenylsulfondicarbonsäure, 1,5-Anthracendicarbonsäure, p-Terphenylen-4,4"-dicarbonsäure und 2,5-Pyridindicarbonsäure und Mischungen davon und die cycloaliphatische Dicarbonsäure (f-A1) und/oder (f-A2) ausgewählt ist aus der Gruppe bestehend aus 1,3-Cyclohexandicarbonsäure, 1,4-Cyclohexandicarbonsäure und Mischungen daraus und das Lactam und/oder die α,ω-Aminocarbonsäuren (g-A1) und/oder (g-A2) ausgewählt ist aus der Gruppe bestehend aus m-Aminobenzoesäure, p-Aminobenzoesäure, Caprolactam (CL), α,ω-Aminocapronsäure, α,ω-Aminoheptansäure, α,ω-Aminoctansäure, α,ω-Aminononansäure, α,ω-Aminodecansäure, α,ω-Aminoundecansäure (AUA), Laurinlactam (LL) und α,ω-Aminododecansäure (ADA), besonderes bevorzugt sind Caprolactam, α,ω-Aminocapronsäure, Laurinlactam, α,ω-Aminoundecansäure und α,ω-Aminododecansäure und Mischungen daraus.

Besonders bevorzugt sind die cycloaliphatischen Diamine (a-A1) ausgewählt aus der Gruppe bestehend aus Bis-(4-amino-3-methyl-cyclohexyl)-methan (MACM) und Bis(4-amino-cyclohexyl)methan (PACM) und Mischungen hiervon und die Diamine mit aromatischen Struktureinheiten (b-A1) sind ausgewählt aus der Gruppe bestehend aus meta-Xylylendiamin und para-Xylylendiamin und Mischungen hiervon und die offenkettigen, aliphatischen Diamine (c-A1) sind ausgewählt aus der Gruppe bestehend aus Diaminen mit 6 bis 10 Kohlenstoffatomen, insbesondere 1,6-Hexandiamin, 1,9-Nonandiamin, 1,10-Decandiamin und Mischungen hiervon und die offenkettigen, aliphatischen Dicarbonsäuren (d-A1) sind ausgewählt sind aus der Gruppe bestehend aus Dicarbonsäuren mit 6 bis 12 Kohlenstoffatomen, insbesondere 1,6-Hexandisäure, 1,10-Decandisäure, 1,12-Dodecandisäure und Mischungen hiervon und die aromatischen Dicarbonsäuren (e-A1) sind ausgewählt aus der Gruppe bestehend aus Terephthalsäure, Isophthalsäure und Mischungen hiervon und die cycloaliphatischen Dicarbonsäuren (f-A1) sind ausgewählt aus der Gruppe bestehend aus 1,3-Cyclohexandicarbonsäure und 1,4-Cyclohexan-dicarbonsäure und Mischungen hiervon und die Lactame und/oder Aminocarbonsäuren (g-A1) sind ausgewählt aus der Gruppe bestehend aus Caprolactam, Aminocapronsäure, Aminoundecansäure, Laurinlactam und Aminododecansäure und Mischungen hiervon.

Weiterhin besonders bevorzugt sind die cycloaliphatischen Diamine (a-A2) ausgewählt aus der Gruppe bestehend aus Bis-(4-amino-3-methyl-cyclohexyl)-methan (MACM) und Bis(4-amino-cyclohexyl)methan (PACM) und Mischungen hiervon und die Diamine mit aromatischen Struktureinheiten (b-A2) sind ausgewählt aus der Gruppe bestehend aus meta-Xylylendiamin und para-Xylylendiamin und Mischungen hiervon und die offenkettigen, aliphatischen Diamine (c-A2) sind ausgewählt aus der Gruppe bestehend aus Diaminen mit 6 bis 10 Kohlenstoffatomen, insbesondere 1,6-Hexandiamin, 1,9-Nonandiamin, 1,10-Decandiamin und Mischungen hiervon und die offenkettigen, aliphatischen Dicarbonsäuren (d-A2) sind ausgewählt sind aus der Gruppe bestehend aus Dicarbonsäuren mit 6 bis 12 Kohlenstoffatomen, insbesondere 1,6-Hexandisäure, 1,10-Decandisäure, 1,12-Dodecandisäure und Mischungen hiervon und die aromatischen Dicarbonsäuren (e-A2) sind ausgewählt aus der Gruppe bestehend aus Terephthalsäure, Isophthalsäure und Mischungen hiervon und die cycloaliphatischen Dicarbonsäuren (f-A2) sind ausgewählt aus der Gruppe bestehend aus 1,3-Cyclohexandicarbonsäure und 1,4-Cyclohexan-dicarbonsäure und Mischungen hiervon und die Lactame und/oder Aminocarbonsäuren (g-A2) sind ausgewählt aus der Gruppe bestehend aus Caprolactam, Aminocapronsäure, Aminoundecansäure, Laurinlactam und Aminododecansäure und Mischungen hiervon.

Gemäß einer weiteren bevorzugten Ausführungsform der vorliegenden Erfindung ist das Polyamid (A1) ausgewählt aus der Gruppe bestehend aus PA MACMI/12, PA MACMI/1012, PA MACMT/12, PA MACMI/MACMT/12, PA MACMI/MACMT, PA MACMI/MACMT/MACM12, PA 6I/6T/MACMI/MACMT, PA 6I/6T/MACMI/MACMT/12, PA 6I/MACMI, PA 6I/6T/PACMI/PACMT, PA 6I/612/MACMI/MACM12, PA 6T/612/MACMT/MACM12, PA 6I/6T/612/MACMI/MACMT/MACM12, PA 6I/6T/MACMI/MACMT/PACMI/PACMT, PA 6I/6T/MACMI/MACMT/PACMI/PACMT/12, PA MACMI/MACMT/MACM36, PA MACMI/MACM36, PA MACMT/MACM36, PA 12/PACMI, PA 12/MACMT, PA 6/PACMT, PA 6/PACMI, PA MXDI, PA MXDI/MXD6, PA MXDI/MXD10, PA MXDI/MXDT, PA MXDI/MACMI, PA MXDI/MXDT/MACMI/MACMT, PA 6I/6T/BACI/BACT, PA MACMI/MACMT/BACI/BACT, PA 6I/6T/MACMI/MACMT/BACI/BACT und Mischungen hiervon, wobei diese Polyamide mehr als 35 mol-% an Monomeren mit aromatischen Struktureinheiten, bezogen auf die Gesamtmenge an Diaminen und Dicarbonsäuren, aufweisen.

Eine andere bevorzugte Ausführungsform der vorliegenden Erfindung sieht vor, dass das Polyamid (A2) ausgewählt ist aus der Gruppe bestehend aus PA MACM9, PA MACM10, PA MACM11, PA MACM12, PA MACM13, PA MACM14, PA MACM15, PA MACM16, PA MACM17, PA MACM18, PA MACM36, PA PACM9, PA PACM10, PA PACM11, PA PACM12, PA PACM13, PA PACM14, PACM15, PA PACM16, PACM17, PA PACM18, PA PACM36, PATMDC9, PA TMDC10, PA TMDC11, PA TMDC12, PATMDC13, PATMDC14, PATMDC15, PA TMDC16, PA TMDC17, PA TMDC18, PA TMDC36 oder Copolyamide wie PA MACM 10/1010, PA MACM10/PACM10, PA MACM 12/1012, PA MACM14/1014, PA PACM10/1010, PA PACM12/1012, PA PACM14/1014, PA MACM12/PACM12, PA MACM14/PACM14, PA MACMI/MACMT/MACM12, PA 6I/612/MACMI/MACM12, PA 6T/612/MACMT/MACM12, PA 6I/6T/612/MACMI/MACMT/MACM12, PA MACMI/MACMT/MACM36, PA MACMI/MACM36, PA MACMT/MACM36, PA MACMI/MACM12, PA MACMT/MACM12, PA MACMI/MACMT/10I/10T/1012, PA 6I/6T/612/PACMI/PACMT/PACM12, PA 6I/612/MACMI/MACM12, PA 6T/612/MACMT/MACM12, PA 10T/1012/MACMT/MACM12, PA 10I/1012/MACMI/MACM12, PA 6I/6T/MACMI/MACMT/PACMI/PACMT/MACM12/PACM12, PA MACMI/PACMI/MACM12/PACM12, PA MACMT/PACMT/MACM 12/PACM12, PA MACMI/PACMT/MACM12/PACM12, PA MACMI/MACM36, PA MACMI/MACMT/MaCM36, PA 1012/MACMI, PA 1012/MACMT, 1010/MACMI, PA 1010/MACMT, PA 612/MACMT, PA 610/MACMT, PA 612/MACMI, PA 610/MACMI, PA 1012/PACMI, PA 1012/PACMT, PA 1010/PACMI, PA 1010/PACMT, PA 612/PACMT, PA 612/PACMI, PA 610/PACMT, PA 610/PACMI und Mischungen hiervon, wobei diese Polyamide höchstens 35 mol-% an Monomeren mit aromatischen Struktureinheiten, bezogen auf die Gesamtmenge an Diaminen und Dicarbonsäuren, aufweisen.

Besonders bevorzugt enthält die Polyamidmischung (A) die folgenden Kombinationen der Polyamide (A1) und (A2) oder besteht daraus:

- Polyamid (A1) 6I/6T/612/MACMI/MACMT/MACM12 und Polyamid (A2) 6I/6T/612/MACMI/MACMT/MACM12, oder
- Polyamid (A1) 6I/6T/MACMI/MACMT und Polyamid (A2) 6I/6T/612/MACMI/MACMT/MACM12, oder
- Polyamid (A1) 6I/6T/612/MACMI/MACMT/MACM12 und Polyamid (A2) MACMI/MACMT/12, oder
- Polyamid (A1) 6I/6T/612/MACMI/MACMT/12/PACMI/PACMT und Polyamid (A2) MACMI/MACMT/MACM12, oder
- Polyamid (A1) 6I/6T/MACMI/MACMT und Polyamid (A2) MACMI/12, oder
- Polyamid (A1) 6I/6T/612/MACMI/MACMT/MACM12 und Polyamid (A2) MACMI/12.

Nach einer weiteren bevorzugten Ausführungsform der vorliegenden Erfindung weist die Komponente (A1) eine nach ISO 11357-2 bestimmte Glasübergangstemperatur von mindestens 135°C, bevorzugt mindestens 140°C besonders bevorzugt 145°C und insbesondere bevorzugt 150°C aufweist.

Eine andere bevorzugte Ausführungsform vorliegender Erfindung sieht vor, dass die Komponente (A2) eine nach ISO 11357-2 bestimmte Glasübergangstemperatur von mindestens 135°C, bevorzugt mindestens 140°C besonders bevorzugt 145°C und insbesondere bevorzugt 150°C auf.

Gemäß einer weiteren bevorzugten Ausführungsform der vorliegenden Erfindung weist die Mischung (A) eine nach ISO 11357-2 bestimmte Glasübergangstemperatur von mindestens 130°C, bevorzugt mindestens 135°C besonders bevorzugt 140°C und insbesondere bevorzugt 157°C auf.

Gemäß einer weiteren bevorzugten Ausführungsform der vorliegenden Erfindung weist die Polyamidformmasse eine nach ISO 11357-2 bestimmte Glasübergangstemperatur von mindestens 130°C, bevorzugt mindestens 135°C besonders bevorzugt 140°C und insbesondere bevorzugt 145°C aufweist.

Eine weitere bevorzugte Ausführungsform der vorliegenden Erfindung sieht vor, dass die Komponente (A1) eine nach ISO 11357-2 bestimmte Glasübergangstemperatur von mindestens 135°C, bevorzugt mindestens 140°C besonders bevorzugt 145°C und insbesondere bevorzugt 150°C aufweist und die Komponente (A2) eine nach ISO 11357-2 bestimmte Glasübergangstemperatur von mindestens 135°C, bevorzugt mindestens 140°C besonders bevorzugt 145°C und insbesondere bevorzugt 150°C aufweist und die Mischung (A) eine nach ISO 11357-2 bestimmte Glasübergangstemperatur von mindestens 130°C, bevorzugt mindestens 135°C besonders bevorzugt 140°C und insbesondere bevorzugt 150°C aufweist.

Nach einer anderen bevorzugten Ausführungsform der vorliegenden Erfindung enthalten die Polyamide (A1) und/oder (A2) höchstens 30 Gew.-%, besonders bevorzugt höchstens 20 Gew.-% an Lactamen und Aminocarbonsäuren, insbesondere sind sie frei von Lactamen und Aminocarbonsäuren, insbesondere frei von Aminoundecansäure.

Gemäß einer weiteren bevorzugten Ausführungsform der vorliegenden Erfindung sind die Polyamide (A2) frei an Monomeren mit aromatischen Struktureinheiten und/oder frei von Lactamen und Aminocarbonsäuren.

Bevorzugt haben die Komponente (A1) und (A2) eine relative Viskosität, gemessen nach ISO 307 (2007) in einer Lösung von 0,5 g Polymer in 100 ml m-Kresol bei 20°C, im Bereich von 1.35 bis 2.40, besonders bevorzugt von 1.40 bis 1.90 und insbesondere bevorzugt von 1.42 bis 1.80.

Komponente (B)

Die erfindungsgemäße Formmasse enthält als Komponente (B) mindestens einen Glasfüller.

EP 3 444 113 B1

Der Glasfüller (B) ist mit 5 bis 50 Gew.-%, bevorzugt mit 10 bis 40 Gew.-% und besonders bevorzugt mit 15 bis 35 Gew.-% und insbesondere bevorzugt mit 15 bis 30 Gew.-% in der Polyamid-Formmasse enthalten, wobei diese Mengenangaben auf die sich aus den Komponenten (A), (B) und (C) zu 100 Gew.-% ergebende Polyamid-Formmasse bezogen sind.

Der Glasfüller ist bevorzugt ausgewählt aus der Gruppe bestehend aus Glasfasern, gemahlenen Glasfasern, Glaspartikeln, Glas-Flakes, Glas-Kugeln, Glas-Hohlkugeln oder aus Kombinationen aus den vorgenannten. Kombinationen von Füllern werden bevorzugt nur dann eingesetzt, wenn die Brechungsindices zwischen den Füllergattungen nicht abweichen. Der mindestens eine Glasfüller weist dabei einen Brechungsindex, gemessen bei einer Wellenlänge von 589 nm, von 1,540 bis 1,585, bevorzugt von 1,545 bis 1,580 oder von 1,550 bis 1,570, auf.

Werden als Glasfüller (B) Glaskugeln oder Glaspartikel ausgewählt, beträgt deren mittlerer Durchmesser 0,3 bis 100 $\mu$m, bevorzugt 0,7 bis 30 $\mu$m, besonders bevorzugt 1 bis 10 $\mu$m.

Eine bevorzugte Ausführungsform der vorliegenden Erfindung sieht vor, dass die die Glassorte des mindestens einen Glasfüllers (B) ausgewählt ist aus der Gruppe bestehend aus E-Glas, ECR-Glas, R-Glas, AR-Glas, insbesondere E-Glas, R-Glas, sowie Mischungen von Glas mit im Wesentlichen gleichem Brechungsindex.

Eine bevorzugte Ausführungsform sieht vor, dass Komponente (B) sich wie folgt zusammensetzt: 50 bis 78 Gew.-%, insbesondere 52 bis 62 Gew.-% Siliciumdioxid, 0 bis 30 Gew.-%, insbesondere 8 bis 28 Gew.-% Aluminiumoxid, 1 bis 25 Gew.-%, insbesondere 8 bis 25 Gew.-% Calciumoxid, 0 bis 7 Gew.-% Magnesiumoxid, 0 bis 20 Gew.-%, insbesondere 0 bis 3 Gew.-% Natrium- und Kaliumoxid, 0 bis 10 Gew.-% Boroxid, 0 bis 20 Gew.-%, insbesondere 0 bis 5 Gew.-% weitere Zusätze, wie z.B. Metalloxide (z.B. Lithium-, Titan-, Zink-, Zirkon-, Eisenoxid).

Bevorzugte Glasfüller sind gemäß der vorliegenden Erfindung Glasfasern.

Gemäß einer bevorzugten Ausführungsform enthält Komponente (B) E-Glasfasern und besteht besonders bevorzugt aus diesen. E-Glasfasern bestehen gemäß ASTM D578-00 aus 52 bis 62 % Siliciumdioxid, 12 bis 16 % Aluminiumoxid, 16 bis 25 % Calciumoxid, 0 bis 10 % Boroxid, 0 bis 5 % Magnesiumoxid, 0 bis 2 % Alkalioxide, 0 bis 1,5 % Titandioxid und 0 bis 0,3 % Eisenoxid. E-Glasfasern haben eine Dichte von 2,54 bis 2,62 g/cm$^3$, einen Zug-E-Modul von 70 bis 75 GPa, eine Zugfestigkeit von 3000 bis 3500 MPa und eine Reißdehnung von 4,5 bis 4,8 %, wobei die mechanischen Eigenschaften an Einzelfasern mit einem Durchmesser von 10 $\mu$m und eine Länge von 12,7 mm bei 23°C und einer relativen Luftfeuchte von 50 % bestimmt wurden.

Konkrete Beispiele für diese E-Glasfasern sind CSG3 von Nittobo, Glasfaser ECS der Firma CPIC, oder Vetrotex 995 der Saint-Gobain Gruppe.

Nach einer anderen bevorzugte Ausführungsform enthält Komponente (B) ECR-Glasfasern oder besteht besonders bevorzugt aus diesen. ECR-Glasfasern bestehen aus 52 bis 64 Gew.-%, insbesondere bevorzugt 54 bis 62 Gew.-% Siliciumdioxid, 8 bis 18 Gew.-%, insbesondere bevorzugt 9 bis 15 Gew.-% Aluminiumoxid, 15 bis 28 Gew.-%, insbesondere bevorzugt 17 bis 25 Gew.-% Calciumoxid, 0 bis 4 Gew.-% Magnesiumoxid, 0 bis 2 Gew.-% Natrium- und Kaliumoxid, 0 bis 1 Gew.-% Boroxid, 0 bis 10 Gew.-%, insbesondere bevorzugt 0 bis 5 weitere Zusätze, wie z.B. Metalloxide (z.B. Titan-, Zink-, Eisenoxid).

Nach einer anderen bevorzugte Ausführungsform enthält Komponente (B) R-Glasfasern oder besteht besonders bevorzugt aus diesen. R-Glasfasern bestehen aus 52 bis 64 Gew.-%, insbesondere bevorzugt 54 bis 62 Gew.-% Siliciumdioxid, 8 bis 18 Gew.-%, insbesondere bevorzugt 9 bis 15 Gew.-% Aluminiumoxid, 15 bis 28 Gew.-%, insbesondere bevorzugt 17 bis 25 Gew.-% Calciumoxid, 0 bis 4 Gew.-% Magnesiumoxid, 0 bis 2 Gew.-% Natrium- und Kaliumoxid, 0 bis 1 Gew.-% Boroxid, 0 bis 10 Gew.-%, insbesondere bevorzugt 0 bis 5 weitere Zusätze, wie z.B. Metalloxide (z.B. Titan-, Zink-, Eisenoxid).

Weiterhin ist es bevorzugt, dass Komponente (B) aus einer Mischung aus E-, ECR-, AR- und R-Glasfasern gebildet wird.

Besonders bevorzugt ist Komponente (B) eine Glasfaser, die im Wesentlichen aus den Komponenten Siliciumdioxid, Calciumoxid und Aluminiumoxid aufgebaut ist oder besteht und das Gewichtsverhältnis SiO$_2$/(CaO+MgO) kleiner 2,7, bevorzugt kleiner 2,5 und insbesondere zwischen 2,1 und 2,4 ist.

Die Glasfasern haben bevorzugt eine kreisförmige oder nicht-kreisförmige Querschnittsfläche.

Glasfasern mit kreisförmigem Querschnitt, also runde Glasfasern, haben typischerweise einen Durchmesser im Bereich von 5 bis 20 $\mu$m, bevorzugt im Bereich von 6 bis 17 $\mu$m und besonders bevorzugt im Bereich von 6 bis 13 $\mu$m. Sie werden bevorzugt als Kurzglasfaser (Schnittglas mit einer Länge von 0,2 bis 20 mm, bevorzugt 2 bis 12 mm) oder Endlosfasern (Rovings) eingesetzt.

Bei flachen Glasfasern, also Glasfasern mit nicht-kreisförmiger Querschnittsfläche, werden solche mit einem Abmessungsverhältnis von der Hauptquerschnittsachse zur senkrecht darauf stehenden Nebenquerschnittsachse von mehr als 2, bevorzugt von 2 bis 8, insbesondere von 2,5 bis 5,0 bevorzugt eingesetzt. Diese sogenannten flachen Glasfasern weisen eine ovale, elliptische, mit Einschnürung(en) versehene elliptische (sogenannte Kokon- oder cocoon-Faser), polygonale, rechteckige oder nahezu rechteckige Querschnittsfläche auf.

Ein weiteres Merkmal der bevorzugten flachen Glasfasern besteht darin, dass die Länge der Hauptquerschnittsachse bevorzugt im Bereich von 6 bis 40 $\mu$m, insbesondere im Bereich von 15 bis 30 $\mu$m und die Länge der Neben-

10

querschnittsachse im Bereich von 3 bis 20 $\mu$m, insbesondere im Bereich von 4 bis 10 $\mu$m liegt. Dabei weisen die flachen Glasfasern eine möglichst hohe Packungsdichte auf, d.h. die Querschnittsfläche der Glasfaser füllt ein gedachtes, den Glasfaserquerschnitt möglichst exakt umgebendes Rechteck zu mindestens 70 %, bevorzugt mindestens 80 % und insbesondere bevorzugt zu mindestens 85 % aus.

Die Glasfasern sind bevorzugtermaßen mit einer insbesondere für Polyamid geeigneten Schlichte, beispielsweise enthaltend einen Haftvermittler auf Basis einer Amino- oder Epoxysilanverbindung, versehen.
Die Glasfasern der Komponente (B) können in Form von Kurzfasern, bevorzugt in Form von Schnittglas mit einer Länge im Bereich von 0,2 bis 20 mm, oder in Form von Endlosfasern vorliegen.

Gemäß einer Ausführungsform enthalten die Polyamid-Formmassen 5 bis 50 Gew.-% einer Glasfaser (B), die in Form von sogenannten Kurzfasern (z.B. Schnittglas mit einer Länge von 0,2 bis 20 mm) oder Endlosfasern (Rovings) verwendet wird, wobei die Glasfaser (B) sogenannte E-Glasfasern mit rundem Querschnitt sind.

Komponente (C)

Die erfindungsgemäße Polyamid-Formmasse weist weiterhin von 0 bis 10 Gew.-% der Komponente (C), bezogen auf die Summe der Komponenten (A) bis (C), auf.

Nach einer bevorzugten Ausführungsform der vorliegenden Erfindung ist der Anteil von Komponente (C) in der Polyamid-Formmasse im Bereich von 0 bis 7 Gew.-%, bevorzugt 0 bis 5 Gew.-% und besonders bevorzugt 0,1 bis 3,0 Gew.-%, bezogen auf die Summe der Komponenten (A) bis (C).

Eine weitere bevorzugte Ausführungsform sieht vor, dass der mindestens eine Zusatzstoff (C) ausgewählt ist aus der Gruppe bestehend aus anorganischen und organischen Stabilisatoren, insbesondere Antioxidantien, Antiozonantien, Hitzestabilisatoren, Lichtschutzmitteln, UV-Stabilisatoren, UV-Absorbern oder UV-Blockern, Monomeren, insbesondere Lactamen, Weichmachern, weniger als 5 Gew.-% bezogen auf die Gesamtmasse der Polyamid-Formmasse an teilkristallinen Polyamiden, insbesondere Polyamid PA 12, Schlagzähmodifikatoren, Gleitmitteln, Farbstoffen, Markierungsmitteln, photochromen Agenzien, Entformungsmitteln, Kondensationskatalysatoren, Kettenreglern, insbesondere monofunktionelle Carbonsäuren oder Aminen, Entschäumern, Antiblockmitteln, optischen Aufhellern, halogenfreien Flammschutzmitteln, natürlichen Schichtsilikaten, synthetischen Schichtsilikaten, nanoskaligen Füllstoffen mit einer Partikelgröße von maximal 100 nm und Mischungen davon.

Insbesondere muss dem Einsatz von Zusatzstoffen der Komponente (C) hohe Beachtung hinsichtlich dem Erhalt einer möglichst hohen Transparenz und einem möglichst geringem Haze geschenkt werden. Es dürfen bevorzugt nur solche Zusatzstoffe in die Formmasse eingebracht werden, die keine oder nur geringe negative Auswirkungen auf die Transmission und den Haze der Formmasse ausüben. Daher enthält die erfindungsgemäße Formmasse bevorzugt nur die folgenden Komponenten (C), ausgewählt aus der Gruppe bestehend aus anorganischen und organischen Stabilisatoren, insbesondere Antioxidantien, Antiozonantien, Hitzestabilisatoren, Lichtschutzmitteln, UV-Stabilisatoren, UV-Absorbern oder UV-Blockern, Monomeren, Gleitmitteln, Farbstoffen, Markierungsmitteln, Entformungsmitteln, Kondensationskatalysatoren, Kettenreglern, insbesondere monofunktionelle Carbonsäuren oder Aminen, Entschäumern, Antiblockmitteln, optischen Aufhellern, in einer Menge von 0,1 bis 3,0 Gew.-%, bezogen auf die Summe der Komponenten (A) bis (C).

Polyamid-Formmasse

Eine bevorzugte Ausführungsform der vorliegenden Erfindung sieht vor, dass der Anteil von Komponente (A) in der Polyamid-Formmasse im Bereich von 55 bis 90 Gew.-%, bevorzugt 60 bis 85 Gew.-% und besonders bevorzugt 62 bis 84,9 Gew.%, bezogen auf die Summe der Komponenten (A) bis (C), liegt, und der Anteil von Komponente (B) in der Polyamid-Formmasse im Bereich von 10 bis 40 Gew.-%, bevorzugt 15 bis 35 Gew.-% und besonders bevorzugt 15 bis 30 Gew.%, bezogen auf die Summe der Komponenten (A) bis (C), liegt, und der Anteil von Komponente (C) in der Formmasse im Bereich von 0 bis 7 Gew.-%, bevorzugt 0 bis 5 Gew.-% und besonders bevorzugt 0,1 bis 3,0 Gew.%, bezogen auf die Summe der Komponenten (A) bis (C), liegt.

Weiterhin sieht eine andere bevorzugte Ausführungsform der vorliegenden Erfindung vor, dass die Polyamid-Formmasse keine anderen Bestandteile als die Komponenten (A) bis (C) enthält.

Nach einer anderen bevorzugten Ausführungsform der vorliegenden Erfindung beträgt die an einem aus der Polyamid-Formmasse hergestellten Formkörper (Platte mit der Dimension 60 x 60 x 2 mm) nach ASTM D1003 gemessene Transparenz mindestens 80 %, bevorzugt mindestens 85 % und besonders bevorzugt mindestens 88 %.

Nach einer anderen bevorzugten Ausführungsform der vorliegenden Erfindung beträgt die an einem aus der Polyamid-Formmasse, enthaltend 20 Gew.-% Glasfüller (B), bevorzugt in Form von Glasfasern, insbesondere in Form von E-Glasfasern, hergestellten Formkörper (Platte mit der Dimension 60 x 60 x 2 mm) nach ASTM D1003 gemessene Transparenz mindestens 80 %, bevorzugt mindestens 85 % und besonders bevorzugt mindestens 88 %.

Eine weitere bevorzugte Ausführungsform sieht vor, dass der an einem aus der Polyamid-Formmasse hergestellten Formkörper (Platte mit der Dimension 60 x 60 x 2 mm) nach ASTM D1003 gemessene Haze maximal 40 %, bevorzugt maximal 35 %, besonders bevorzugt maximal 25 % und ganz besonders bevorzugt maximal 20 % beträgt.

Eine weitere bevorzugte Ausführungsform sieht vor, dass der an einem aus der Polyamid-Formmasse, enthaltend 20 Gew.-% Glasfüller (B), bevorzugt in Form von Glasfasern, insbesondere in Form von E-Glasfasern, hergestellten Formkörper (Platte mit der Dimension 60 x 60 x 2 mm) nach ASTM D1003 gemessene Haze maximal 30 %, bevorzugt maximal 25 %, besonders bevorzugt maximal 20 % und ganz besonders bevorzugt maximal 15 % beträgt.

Gemäß einer anderen bevorzugten Ausführungsform vorliegender Erfindung beträgt der an einem aus der Polyamid-Formmasse hergestellten Formkörper (Platte mit der Dimension 60 x 60 x 2 mm) und nach DIN EN ISO 4287 (2010-07) mittels einer MarSurf XR1 Surface Measuring Station bestimmte arithmetische Mittenrauwert Ra höchstens 0,12 $\mu$m, bevorzugt höchstens 0,09 $\mu$m, besonders bevorzugt von 0,01 bis 0,10 $\mu$m, insbesondere von 0,02 bis 0,09 $\mu$m, und/oder die Rautiefe $R_z$ höchstens 1,50 $\mu$m, bevorzugt höchstens 1,00 $\mu$m, besonders bevorzugt von 0,05 bis 1,30 $\mu$m, insbesondere von 0,10 bis 1,00 $\mu$m.

Gemäß einer anderen bevorzugten Ausführungsform vorliegender Erfindung beträgt der an einem aus der Polyamid-Formmasse, enthaltend 20 Gew.-% Glasfüller (B), bevorzugt in Form von Glasfasern, insbesondere in Form von E-Glasfasern, hergestellten Formkörper (Platte mit der Dimension 60 x 60 x 2 mm) und nach DIN EN ISO 4287 (2010-07) mittels einer MarSurf XR1 Surface Measuring Station bestimmte arithmetische Mittenrauwert Ra höchstens 0,1 $\mu$m, bevorzugt höchstens 0,07 $\mu$m, besonders bevorzugt von 0,01 bis 0,08 $\mu$m, insbesondere von 0,02 bis 0,06 $\mu$m, und/oder die Rautiefe $R_z$ höchstens 1,5 $\mu$m, bevorzugt höchstens 0,85 $\mu$m, besonders bevorzugt von 0,05 bis 1,0 $\mu$m, insbesondere von 0,1 bis 0,9 $\mu$m.

Nach einer weiteren bevorzugten Ausführungsform der vorliegenden Erfindung beträgt die an einem aus der Polyamid-Formmasse hergestellten Formkörper (Platte mit der Dimension 60 x 60 x 2 mm) nach ASTM D1003 gemessene Transparenz mindestens 80 %, bevorzugt mindestens 85 % und besonders bevorzugt mindestens 88 % und der an einem aus der Polyamid-Formmasse hergestellten Formkörper (Platte mit der Dimension 60 x 60 x 2 mm) nach ASTM D1003 gemessene Haze maximal 40 %, bevorzugt maximal 35 %, besonders bevorzugt maximal 25 % und ganz besonders bevorzugt maximal 20 % und die an einem aus der Polyamid-Formmasse, enthaltend 20 Gew.-% Glasfüller (B), bevorzugt in Form von Glasfasern, insbesondere in Form von E-Glasfasern, hergestellten Formkörper (Platte mit der Dimension 60 x 60 x 2 mm) und nach DIN EN ISO 4287 (2010-07) mittels einer MarSurf XR1 Surface Measuring Station bestimmte arithmetische Mittenrauwert Ra höchstens 0,12 $\mu$m, bevorzugt höchstens 0,09 $\mu$m, besonders bevorzugt von 0,01 bis 0,10 $\mu$m, insbesondere von 0,02 bis 0,09 $\mu$m, und/oder bestimmte Rautiefe $R_z$ höchstens 1,50 $\mu$m, bevorzugt höchstens 1,00 $\mu$m, besonders bevorzugt von 0,05 bis 1,30 $\mu$m, insbesondere von 0,10 bis 1,00 $\mu$m.

Nach einer weiteren bevorzugten Ausführungsform der vorliegenden Erfindung beträgt die an einem aus der Polyamid-Formmasse, enthaltend 20 Gew.-% Glasfüller (B), bevorzugt in Form von Glasfasern, insbesondere in Form von E-Glasfasern, hergestellten Formkörper (Platte mit der Dimension 60 x 60 x 2 mm) nach ASTM D1003 gemessene Transparenz mindestens 80 %, bevorzugt mindestens 85 % und besonders bevorzugt mindestens 88 % und der an einem aus der Polyamid-Formmasse, enthaltend 20 Gew.-% Glasfüller (B), bevorzugt in Form von Glasfasern, insbesondere in Form von E-Glasfasern, hergestellten Formkörper (Platte mit der Dimension 60 x 60 x 2 mm) nach ASTM D1003 gemessene Haze maximal 30 %, bevorzugt maximal 25 %, besonders bevorzugt maximal 20 % und ganz besonders bevorzugt maximal 15 % und die an einem aus der Polyamid-Formmasse, enthaltend 20 Gew.-% Glasfüller (B), bevorzugt in Form von Glasfasern, insbesondere in Form von E-Glasfasern, hergestellten Formkörper (Platte mit der Dimension 60 x 60 x 2 mm) und nach DIN EN ISO 4287 (2010-07) mittels einer MarSurf XR1 Surface Measuring Station bestimmte arithmetische Mittenrauwert Ra höchstens 0,1 $\mu$m, bevorzugt höchstens 0,07 $\mu$m, bevorzugt von 0,01 bis 0,08 $\mu$m, insbesondere von 0,02 bis 0,06 $\mu$m, und/oder bestimmte Rautiefe $R_z$ höchstens 1,5 $\mu$m, bevorzugt höchstens 0,85 $\mu$m, bevorzugt von 0,05 bis 1,0 $\mu$m, insbesondere von 0,1 bis 0,9 $\mu$m.

Eine andere bevorzugte Ausführungsform der vorliegenden Erfindung sieht vor, dass der gemäß ISO 527 bestimmte Zug-E-Modul der Polyamid-Formmasse im Bereich von 3'000 bis 15'000 MPa, bevorzugt von 5'000 bis 12'000 MPa und besonders bevorzugt von 6'000 bis 10'000 MPa liegt.

Nach einer anderen bevorzugten Ausführungsform der vorliegenden Erfindung beträgt die gemäß ISO 527 bestimmte Bruchspannung der Polyamid-Formmasse von 100 bis 250 MPa, bevorzugt von 120 bis 200 MPa und besonders bevorzugt von 130 bis 180 MPa.

Gemäß einer weiteren bevorzugten Ausführungsform der vorliegenden Erfindung ist die gemäß ISO 527 bestimmte Bruchdehnung der Polyamid-Formmasse grösser 2 %, bevorzugt grösser 3 % und besonders bevorzugt im Bereich von 3 bis 10 %.

Nach einer anderen bevorzugten Ausführungsform der vorliegenden Erfindung ist die gemäß ISO179/2 bestimmte Schlagzähigkeit der Polyamid-Formmasse grösser 30 kJ/mm$^2$, bevorzugt grösser 40 kJ/mm$^2$ und besonders bevorzugt im Bereich von 40 bis 100 kJ/mm$^2$.

Gemäß einer weiteren bevorzugten Ausführungsform der vorliegenden Erfindung beträgt die gemäß ISO 179/2 bestimmte Kerbschlagzähigkeit der Polyamid-Formmasse wenigstens 8 kJ/mm$^2$, bevorzugt wenigstens 9 kJ/mm$^2$ und besonders bevorzugt von 10 bis 20 kJ/mm$^2$.

Nach einer anderen bevorzugten Ausführungsform der vorliegenden Erfindung beträgt die nach ISO 75 (2013-04) bestimmte HDT A der Polyamid-Formmasse mindestens 120°C, besonders bevorzugt mindestens 125°C und ganz besonders bevorzugt mindestens 130°C und liegt bevorzugt im Bereich von 120 bis 180°C, besonders bevorzugt 125 bis 160°C und ganz besonders bevorzugt von 130 bis 150°C.

Gemäß einer weiteren bevorzugten Ausführungsform der vorliegenden Erfindung liegt die nach ISO 75 (2013-04) bestimmte HDT B der Polyamid-Formmasse mindestens 120°C, besonders bevorzugt mindestens 125°C und ganz besonders bevorzugt mindestens 130°C und liegt bevorzugt im Bereich von 120 bis 180°C, besonders bevorzugt 125 bis 160°C und ganz besonders bevorzugt von 135 bis 150°C.

Nach einer anderen bevorzugten Ausführungsform der vorliegenden Erfindung ist die Polyamid-Formmasse frei von Lactamen und Aminocarbonsäuren, insbesondere frei von Aminoundecansäure. Weiterhin ist es bevorzugt, dass die Polyamid-Formmasse frei ist von Polyetheramiden.

Eine bevorzugte Polyamid-Formmasse gemäß vorliegender Erfindung enthält die folgenden Komponenten und besteht besonders bevorzugt aus diesen:

(A) 50 bis 95 Gew.-% einer Mischung (A) aus
60 bis 90 % Polyamid (A1);
10 bis 40 % Polyamid (A2);
(B) 5 bis 50 Gew.-% mindestens eines Glasfüllers mit Brechungsindex im Bereich von 1,55 bis 1,57;
(C) 0 bis 10 Gew.-% mindestens eines Zusatzstoffs;

wobei $\Delta 1$ und $\Delta 2$ gleich oder grösser als 0.003 sind, insbesondere im Bereich von 0.003 bis 0.03 liegen.

Eine weitere bevorzugte Polyamid-Formmasse gemäß vorliegender Erfindung enthält die folgenden Komponenten und besteht besonders bevorzugt aus diesen:

(A) 50 bis 95 Gew.-% einer Mischung (A) aus

(A1) 60 bis 90 % Polyamid PA 6I/6T/612/MACMI/MACMT/MACM12 mit 36 bis 80 Mol-% an Monomeren mit aromatischen Struktureinheiten, bezogen auf die Gesamtmenge an Diaminen und Dicarbonsäuren im Polyamid (A1);
(A2) 10 bis 40 % Polyamid PA 6I/6T/612/MACMI/MACMT/MACM12 mit 0 bis 33 Mol-% an Monomeren mit aromatischen Struktureinheiten, bezogen auf die Gesamtmenge an Diaminen und Dicarbonsäuren im Polyamid (A2);

(B) 5 bis 50 Gew.-% mindestens eines Glasfüllers mit Brechungsindex im Bereich von 1,5400 bis 1,600;
(C) 0 bis 10 Gew.-% mindestens eines Zusatzstoffs.

Eine weitere bevorzugte Polyamid-Formmasse gemäß vorliegender Erfindung enthält die folgenden Komponenten und besteht besonders bevorzugt aus diesen:

(A) 50 bis 95 Gew.-% einer Mischung aus

(A1) 10 bis 40 % Polyamid PA 6I/6T/MACMI/MACMT;
(A2) 60 bis 90 % Polyamid PA 6I/6T/612/MACMI/MACMT/MACM12;

(B) 5 bis 50 Gew.-% mindestens eines Glasfüllers mit Brechungsindex im Bereich von 1,55 bis 1,58;
(C) 0 bis 10 Gew.-% mindestens eines Zusatzstoffs.

Formkörper

Die vorliegende Erfindung betrifft weiterhin Formkörper umfassend die Formmasse wie oben definiert, bevorzugt besteht der Formkörper aus dieser Polyamid-Formmasse. Diese Formkörper sind insbesondere ausgewählt aus der Gruppe bestehend aus dekorative Strukturrahmen, Bedienungknöpfen, Abdeckungen, Sichtflächen, hinterleuchtete Komponenten, Blenden von Mobiltelefonen, Tablets, Gehäuse von elektronischen Geräten, Dekorteilen in Fahrzeugen, Haushaltsgeräten, Behältern, Fahrzeugschlüsseln, Freizeit- und Outdoorartikeln.

Gemäß einer bevorzugten Ausführungsform der vorliegenden Erfindung sind die Formkörper mehrschichtig. Insbesondere handelt es sich um einen zwei- oder dreischichtigen Formkörper, der bevorzugt nur eine Schicht gebildet aus der zuvor beschriebenen erfindungsgemäßen Formmasse enthält.

Bevorzugtermassen handelt es sich um einen mehrschichtigen Formkörper gebildet aus einer Schicht (S1), enthaltend oder bestehend aus der erfindungsgemäßen Polyamid-Formmasse, und mindestens einer weiteren Schicht (S2), (S3) oder (S4), die frei von Glasfüller (B) ist oder die einen im Vergleich zur Schicht (S1) reduzierten Anteil an Glasfüller (B) aufweist, wobei der Glasfülleranteil bevorzugt um wenigstens 50 Gew.-% gegenüber der Schicht (S1) reduziert ist.

Diese mehrschichtigen Formkörper ermöglichen eine gute Oberflächenqualität auch bei Verwendung von höherviskosen, transparenten Polyamiden als Bestandteil der Mischung (A) und/oder die Verwendung von Formmassen mit höherem Füllgrad an Glasfüller (B) in der Schicht (S1). Zudem übt die Werkzeugoberfläche einen geringeren Einfluss auf die Oberflächenqualität aus, so dass auch bei nicht gerade optimalen Werkzeugoberflächen dennoch eine gute Oberflächengüte realisiert werden kann. Dies reduziert die Oberflächenrauhigkeit und den Haze des Formkörpers und erhöht dessen Transparenz. Des Weiteren kann beispielsweise eine hochbeständige Schicht (S2), (S3) oder (S4) dem Mehrschichtformkörper eine insgesamt bessere chemische Beständigkeit verleihen, weil die möglicherweise weniger beständige Schicht (S1) nicht in direktem Kontakt zu den Chemikalien steht. In diesem Zusammenhang kann bei geeigneter Auswahl der außen liegenden Schichten (S2) bis (S4) ein Mehrschichtformkörper mit guter Spannungsrissbeständigkeit erhalten werden. Somit kann die Beständigkeit gegenüber Medien sowie die Transparenz und der Haze gesteigert werden, ohne grosse Einbusse bei den mechanischen Eigenschaften zu erleiden.

Nach einer anderen bevorzugten Ausführungsform weist der Formkörper einen arithmetischen Mittenrauwert Ra von höchstens 0,1 $\mu$m, bevorzugt von 0,01 bis 0,08 $\mu$m, insbesondere von 0,02 bis 0,06 $\mu$m, und/oder eine Rautiefe $R_z$ von höchstens 1.5 $\mu$m, bevorzugt von 0.05 bis 1.0 $\mu$m, insbesondere von 0,1 bis 0.9 $\mu$m, jeweils bestimmt nach DIN EN ISO 4287 (2010-07) mittels einer MarSurf XR1 Surface Measuring Station, auf.

Nach einer weiteren bevorzugten Ausführungsform der vorliegenden Erfindung beträgt die an einem aus der Polyamid-Formmasse hergestellten mehrschichtigen Formkörper, enthaltend in der Schicht (S1) 20 Gew.-% Glasfüller (B), bevorzugt in Form von Glasfasern, insbesondere in Form von E-Glasfasern, hergestellten Formkörper (Platte mit der Dimension 60 x 60 x 2 mm) nach ASTM D1003 gemessene Transparenz mindestens 80 %, bevorzugt mindestens 85 % und besonders bevorzugt mindestens 88 % und der nach ASTM D1003 gemessene Haze maximal 25 %, bevorzugt maximal 20 %, besonders bevorzugt maximal 15 % und ganz besonders bevorzugt maximal 12 %.

Bevorzugte Schichtabfolgen sind (S1)/(S2) oder (S2)/(S1)/(S2) oder (S3/(S1)/(S4). Dabei werden die Schichten von oben nach unten angeben, d.h. (S1)/(S2) meint beispielsweise, dass (S1) die oberste Schicht und (S2) die unterste Schicht des Formkörpers bildet.

Nach einer weiteren bevorzugten Ausführungsform der vorliegenden Erfindung weist der Formkörper die Schichten (S2), (S3) oder (S4) auf, die auf der Polyamid-Mischung (A) oder auf Polyamid (A1) oder auf Polyamid (A2) oder auf einem zu (A1) und (A2) unterschiedlichen Polyamid basieren und bevorzugt aus diesen bestehen. Der Begriff basieren ist im Sinne vorliegender Anmeldung so auszulegen, dass die Schicht zu mindestens 50 %, bevorzugt zu mindestens 70 % und besonders bevorzugt zu mindestens 90 % aus dieser Schicht besteht.

Eine andere bevorzugte Ausführungsform der vorliegenden Erfindung sieht vor, dass die mittlere Schichtdicke der Schicht (S1) wenigstens 2, bevorzugt wenigstens 5 und besonders bevorzugt wenigstens 9 mal grösser ist als die Summe aller mittleren Schichtdicken der Schichten (S2), (S3) oder (S4).

Nach einer anderen bevorzugten Ausführungsform der vorliegenden Erfindung ist der Gewichtsanteil der Schicht (S1) im Formkörper wenigstens 2, bevorzugt wenigstens 5 und besonders bevorzugt wenigstens 10 mal grösser als der Gewichtsanteil aller Schichten (S2), (S3) und (S4) im Formkörper.

Gemäß einer weiteren bevorzugten Ausführungsform vorliegender Erfindung basieren die Schichten (S2), (S3) oder (S4) auf einem Polyamid ausgewählt aus der Gruppe bestehend aus PA MACM12, PA MACMI/MACMT/12, PA 11, PA 12 und Mischungen hiervon bzw. besteht bevorzugt aus diesen.

Nach einer anderen Ausführungsform vorliegender Erfindung wird die Schicht (S2), (S3) oder (S4) mit der Schicht (S1) hinterspritzt oder die Schichten (S1) und (S2), (S3) oder (S4) wurden durch Zwei- oder Mehrkomponenten-Spritzguss (Mono-Sandwich-Verfahren) erzeugt, wobei der mehrschichtige Formkörper integral in einem Spritzgusszyklus gefertigt wird.

Verwendung transparentes Polyamid

Weiterhin betrifft die vorliegende Erfindung die Verwendung mindestens eines transparenten Polyamids (A1), welches amorph oder mikrokristallin ist und mehr als 35 Mol-% an Monomeren mit aromatischen Struktureinheiten, bezogen auf die Gesamtmenge an Diaminen und Dicarbonsäuren, aufweist, zur Verringerung des Haze einer Polyamid-Formmasse, die neben mindestens einem transparenten Polyamid (A2), welches amorph oder mikrokristallin ist und höchstens 25 Mol-% an Monomeren mit aromatischen Struktureinheiten, bezogen auf die Gesamtmenge an Diaminen und Dicarbonsäuren, aufweist, auch einen Glasfüller mit einem Brechungsindex im Bereich von 1,540 bis 1,600 und optional Zusatzstoffe enthält. Dabei bilden die Polyamide (A1) und (A2) die Polyamidmischung (A).

Gemäß einer bevorzugten Ausführungsform ist der Anteil des Polyamids (A1) in der Polyamidmischung (A) größer als 50 Gew.-% falls das Verhältnis $\Delta 2/\Delta 1 > 1$ ist und der Anteil des Polyamids (A2) in der Polyamidmischung (A) bestehend aus (A1) und (A2) größer als 50 Gew.-% falls das Verhältnis $\Delta2/\Delta1 \leq 1$ ist.

Anhand der nachfolgenden Beispiele soll der erfindungsgemäße Gegenstand näher erläutert werden, ohne diesen auf die hier gezeigten spezifischen Ausführungsformen einschränken zu wollen.

## 1 Messmethoden

Im Rahmen dieser Anmeldung wurden die folgenden Messmethoden verwendet:

Oberflächenrauheit, $R_a$, $R_z$

Die Rauheit der Prüfkörper wurde gemäß der DIN EN ISO 4287 (2010-07) mit einem MarSurf XR1 Surface Measuring Station der Firma Mahr GmbH (DE) gemessen. Die Rauheitswerte, nämlich der arithmetische Mittenrauwert Ra und die Rautiefe $R_z$, werden in Mikrometern ($\mu$m) angegeben.

Haze, Transparenz

Transparenz und Haze wurden nach ASTM D1003 auf einem Messgerät Haze Gard Plus der Firma BYK Gardner an 2 mm dicken Platten (60 mm x 60 mm Oberfläche) mit CIE Lichtart C bei 23 °C gemessen. Die Oberfläche des Prüflings (Platte 60 x 60 x 2 mm) verfügte über einen arithmetischen Mittenrauwert $R_a$ und eine Rautiefe $R_z$ wie für die Formmassen gemäß der Beispiele und Vergleichsbeispiele in Tabelle 2 oder für den Mehrschichtformkörper explizit angegeben. Die Herstellung der Prüfkörper wird unter Punkt 3.3 beschrieben.

Schmelzpunkt ($T_m$) und Schmelzenthalpie ($\Delta H_m$)

Der Schmelzpunkt und Schmelzenthalpie wurden nach ISO 11357-3 (2013) am Granulat bestimmt. Die DSC (Differential Scanning Calorimetry) Messungen wurden mit einer Aufheizrate von 20 K/min durchgeführt.

Glasübergangstemperatur $T_g$

Die Bestimmung der Glasübergangstemperatur $T_g$ erfolgte nach ISO 11357-2 (2013) an Granulat mittels Differential Scanning Calorimetry (DSC). Diese wurde bei jeder der beiden Aufheizungen mit einer Aufheizrate von 20 K/min durchgeführt. Nach der ersten Aufheizung wurde die Probe in Trockeneis abgeschreckt. Die Glasübergangstemperatur ($T_g$) wurde bei der zweiten Aufheizung bestimmt. Der Mittelpunkt des Glasübergangbereichs, welcher als Glasübergangstemperatur angegeben wurde, wurde nach der Methode "Half Height" ermittelt.

Relative Viskosität, $\eta_{rel}$

Die relative Viskosität wurde gemäß ISO 307 (2007) bei 20°C bestimmt. Dazu wurden 0,5 g Polymergranulat in 100 ml m-Kresol eingewogen, die Berechnung der relativen Viskosität (RV) nach RV = $t/t_0$ erfolgte in Anlehnung an Abschnitt 11 der Norm.

Zug E-Modul

Die Bestimmung des Zug-E-Moduls und der Zugfestigkeit wurde gemäß ISO 527 (2012) bei 23°C mit einer Zuggeschwindigkeit von 1 mm/min an einem ISO-Zugstab (Typ A1, Masse 170 x 20/10 x 4) hergestellt gemäß der Norm: ISO/CD 3167 (2003), durchgeführt.

Bruchspannung und Bruchdehnung

Die Bestimmung von Bruchspannung und Bruchdehnung wurden gemäß ISO 527 (2012) bei 23°C mit einer Zuggeschwindigkeit von 5 mm/min an einem ISO-Zugstab, Typ A1 (Masse 170 x 20/10 x 4 mm), hergestellt gemäß der Norm ISO/CD 3167 (2003), durchgeführt.

Schlagzähigkeit nach Charpy

Die Bestimmung der Schlagzähigkeit nach Charpy wurde gemäß ISO 179/2*eU (1997, * 2 = instrumentiert) bei 23°C an einem ISO-Prüfstab, Typ B1 (Masse 80 x 10 x 4 mm), hergestellt gemäß der Norm ISO/CD 3167 (2003), durchgeführt.

Kerbschlagzähigkeit nach Charpy

Die Bestimmung der Kerbschlagzähigkeit nach Charpy wurde gemäß ISO 179/2*eA (1997, * 2 = instrumentiert) bei 23°C an einem ISO-Prüfstab, Typ B1 (Masse 80 x 10 x 4 mm), hergestellt gemäß der Norm ISO/CD 3167 (2003), durchgeführt.

Wärmeformbeständigkeitstemperatur (HDT)

Die Wärmeformbeständigkeitstemperatur oder auch Verformungstemperatur unter Belastung genannt (HDT, nach englischem "heat deflection temperature") wird als HDT/A und/oder HDT/B berichtet. HDT/A entspricht dem Verfahren A mit einer Biegespannung von 1,80 MPa und HDT/B entspricht dem Verfahren B mit einer Biegespannung von 0,45 MPa. Die HDT-Werte wurden gemäss ISO 75 (2013-04) an ISO-Schlagstäben der Dimension 80 x 10 x 4 mm bestimmt.

Messung des Brechungsindexes von Glasfasern

Die Bestimmung des Brechungsindex von Glasfasern erfolge mit der Methode der Beckeschen Linie und unter Verwendung von Immersionsflüssigkeiten bezogen auf 589 nm in Anlehnung an Methode B der ISO 489 (1999-04).

Messung des Brechungsindex von Polyamiden

Der Brechungsindex der Polyamide A1 und A2 wurde nach ISO 489 (1999-04) an 2 mm dicken Platten (60x60x2 mm) bei einer Wellenlänge von 589 nm und einer Temperatur von 23 °C mittels eines Abbe-Refraktometers der Firma Carl Zeiss (Methode A) bestimmt. Zwischen der untersuchten Platte und der Prismenfläche wurde als Kontaktflüssigkeit 1-Bromnaphthalin aufgetragen.

**2 Ausgangsmaterialien**

Die in den Beispielen und Vergleichsbeispielen verwendeten Materialien werden in Tabelle 1 zusammengefasst.

**Tabelle 1:** In den Beispielen und Vergleichsbeispielen verwendete Materialien.

| Komponenten | Beschreibung | Hersteller |
|---|---|---|
| Polyamid 1<br><br>Komponente (A1) | PA 6I/MACMI/6T/MACMT (77/13/8/2) rel. Viskosität = 1.42<br><br>aromatische Struktureinheiten: 50 Mol-%<br>Brechungsindex: 1,582<br>Transparenz: 93 %; Haze: 0.5 %; Tg: 147 °C | EMS-CHEMIE AG (Schweiz) |
| Polyamid 2<br><br>Komponente (A1) | PA 6I/6T/612/MACMI/MACMT/MACM12 (28/28/19/9/9/7)<br><br>rel. Viskosität = 1.73<br>aromatische Struktureinheiten: 37 Mol-%<br>Brechungsindex: 1,559<br>Transparenz: 93 %; Haze: 0.6 %; Tg: 140 °C | EMS-CHEMIE AG (Schweiz) |
| Polyamid 3<br><br>Komponente (A2) | PA 6I/6T/612/MACMI/MACMT/MACM12 (20/20/24/11/11/14)<br>rel. Viskosität = 1.74<br>aromatische Struktureinheiten: 31 Mol-%<br>Brechungsindex: 1,548<br>Transparenz: 93 %; Haze: 0.6 %; Tg: 144 °C | EMS-CHEMIE AG (Schweiz) |
| PA 6/12 | PA 6/12 (90/10) | EMS-CHEMIE AG |
|  | rel. Viskosität = 1,81 | (Schweiz) |
| Glasfaser | ECS 301T-3 Brechungsindex: 1,556 | CPIC (China) |

**3 Beispiele und Vergleichsbeispiele**

3.1 Herstellung der Polyamid-Formmassen

Generell werden zur Herstellung der Kunststoff-Formmasse die Komponenten auf üblichen Compoundiermaschinen, wie z.B. ein- oder zweiwelligen Extrudern oder Schneckenknetern, in der Polymerschmelze gemischt (compoundiert). Die Komponenten werden dabei einzeln in den Einzug dosiert oder in Form eines Dryblends zugeführt. Werden Zusatzstoffe (Additive) verwendet, können diese direkt oder in Form eines Masterbatches eingebracht werden. Bei einer Dryblend-Herstellung werden die getrockneten Polymer-Granulate und die Zusatzstoffe vermischt. Zur Vermeidung der Feuchtigkeitsaufnahme kann das Mischen unter getrocknetem Schutzgas erfolgen. Die eingesetzten Glasfasern werden über einen Sidefeeder im beabsichtigten Verhältnis in die Polymerschmelze dosiert und im Zylinder der Compoundiermaschine weiter homogenisiert. Die Dosierungen aller Komponenten in den Einzug bzw. Sidefeeder werden so über elektronisch gesteuerte Waagen eingestellt, dass die gewünschten Mengenverhältnisse Glas - Polymer daraus resultieren.

Die Compoundierung erfolgt bei eingestellten Extruder-Zylindertemperaturen von z.B. 230°C bis 350°C. Vor der Düse kann Vakuum angelegt oder atmosphärisch entgast werden. Die Schmelze wird in Strangform in ein Wasserbad ausgetragen und granuliert. Bevorzugt wird zum Granulieren eine Unterwassergranulierung oder eine Stranggranulierung verwendet.

Die somit bevorzugt in Granulatform erhaltene Kunststoff-Formmasse wird anschließend getrocknet und kann nachher durch Spritzguss zu Formkörpern weiterverarbeitet werden. Dies erfolgt über ein erneutes Aufschmelzen des trockenen Granulats in einem beheizbaren Zylinder, Fördern der Schmelze in eine Spritzgussform, in der die Schmelze erstarren kann.

3.2 Herstellung der Polyamid-Formmasse gemäß Beispiel B1 bis B3

Die Formmassen für die Beispiele B1 bis B3 sowie für die Vergleichsbeispiele VB1 bis VB3 wurden auf einem Zweiwellenextruder der Firma Werner & Pfleiderer Typ ZSK 25 hergestellt. Die Polyamide (A1) und (A2) wurden in den in Tabelle 2 angegebenen Mengenanteilen über Dosierwaagen in den Einzug des Extruders dosiert. Die eingesetzten Glasfasern wurden über einen Sidefeeder im beabsichtigten Verhältnis in die Polymerschmelze gefördert und im Zylinder der Compoundiermaschine weiter homogenisiert.

Die Temperatur des ersten Gehäuses wurde auf 80 °C eingestellt, diejenige der restlichen Gehäuse aufsteigend von 270 bis 300 °C. Es wurde eine Drehzahl von 200 U/min und ein Durchsatz von 15 kg/h verwendet und in der dritten Zone vor der Düse im Stickstoffstrom entgast. Die als Strang ausgetragene Polyamid-Formmasse wurde im Wasserbad bei 80 °C abgekühlt, granuliert und das erhaltene Granulat bei 90 °C im Vakuum bei 30 mbar auf einen Wassergehalt von unter 0,1 Gew.-% getrocknet.

3.3 Herstellung der Prüfkörper

Aus dem erhaltenen Granulat wurden Zugstäbe, Schlagstäbe und Platten als Probekörper gespritzt, an denen die in Tabelle 2 angegebenen Eigenschaften bestimmt wurden. Die Prüfkörper wurden auf einer Spritzgussmaschine der Firma Arburg, Modell Allrounder 420 C 1000-250 hergestellt. Dabei wurden aufsteigende Zylindertemperaturen von 250 °C bis 290 °C verwendet. Bei allen gespritzten Formkörpern betrug die Schmelzetemperatur jeweils 294 - 300 °C. Die Werkzeugtemperatur lag im Fall von Platten (2mm x 60 mm x 60 mm) jeweils bei 120 °C. Bei den Zug- und Schlagstäben lag die Werkzeugtemperatur bei jeweils 80 °C. Die Prüfkörper wurden, sofern nichts anderes angegeben ist, in trockenem Zustand verwendet; dazu wurden sie nach dem Spritzguss mindestens 48 h bei Raumtemperatur in trockener Umgebung, d.h. über Silicagel gelagert.

Im Fall von Platten (2mm x 60 mm x 60 mm) zur Bestimmung der optischen Eigenschaften wurden die Flächen der Kavität der Spritzgussform hochglanzpoliert, sodass die Formkörper (Platten) eine Hochglanzoberfläche mit einem arithmetischen Mittenrauwert Ra von 0,01 bis 0,08 $\mu$m, und/oder einer Rautiefe Rz von 0,05 bis 1,0 $\mu$m, nach DIN EN ISO 4287 erhielten.

3.4 Ergebnisse

3.4.1 Einschichtige Formkörper

Die folgende Tabelle 2 betrifft erfindungsgemäße Beispiele und Vergleichsbeispiele.

Tabelle 2: Beispiele und Vergleichsbeispiele.

| Komponenten | Einheit | B1 | B2 | B3 | VB1 | VB2 | VB3 |
|---|---|---|---|---|---|---|---|
| Polyamid 1 (Komponente (A1)) | Gew.-% | - | - | 24 | - | - | 80 |
| Polyamid 2 (Komponente (A1)) | Gew.-% | 64 | 61 | - | 19,06 | - | - |
| Anteil (A1) in (A) | Gew.-% | 80 | 80 | 30 | 25 | - | 100 |
| Polyamid 3 (Komponente (A2)) | Gew.-% | 16 | 15,25 | 56 | 57,19 | 80 | - |
| Anteil (A2) in (A) | Gew.-% | 20 | 20 | 70 | 75 | 100 | - |
| $\Delta 1$ | - | 0,003 | 0,003 | 0,296 | 0,003 | - | - |
| $\Delta 2$ | - | 0,008 | 0,008 | 0,008 | 0,008 | - | - |
| $\Delta 2/\Delta 1$ | - | 2,67 | 2,67 | 0,027 | 2,67 | - | - |
| PA 6/12 | Gew.-% | - | 3,75 | - | 3,75 | - | - |
|  | Gew.-% | 20 | 20 | 20 | 20 | 20 | 20 |
| **Eigenschaften** |  |  |  |  |  |  |  |
| Tg der Mischung A | °C | 141 | 133 | 146 | 132 | - | - |
| Haze der Mischung A | % | 0.5 | 0.6 | 0.8 | 0.7 | - | - |
| Transparenz der Mischung A | % | 93 | 93 | 92 | 92 | - | - |
| Tg der Formmasse | °C | 140 | 134 | 145 | 131 | 143 | 147 |
| Haze der Formmasse | % | 17 | 13 | 15 | 47 | 52 | 95 |
| Transparenz der Formmasse | % | 89 | 90 | 90 | 82 | 88 | 84 |
| Ra Platte 60x60x2 mm | $\mu$m | 0.059 | 0.052 | 0.056 | 0.060 | 0.059 | 0.062 |
| Rz Platte 60x60x2 mm | $\mu$m | 0.792 | 0.741 | 0.785 | 0.791 | 0.788 | 0.801 |
| Zug-E-Modul | MPa | 6600 | 6500 | 6700 | 6400 | 6200 | 6750 |
| Bruchspannung | MPa | 153 | 155 | 152 | 145 | 143 | 135 |
| Bruchdehnung | % | 4,1 | 4,1 | 3.5 | 3,4 | 4.0 | 2.1 |
| Schlagzähigkeit | kJ/mm$^2$ | 63 | 58 | 46 | 20 | 52 | 52 |
| Kerbschlagzähigkeit | kJ/mm$^2$ | 11 | 10 | 10 | 11 | 11 | 10 |
| HDTA | °C | 134 | 132 | 133 | 131 | 131 | 135 |
| HDT B | °C | 138 | 137 | 138 | 136 | 137 | 140 |

3.4.2 3-Schichtformkörper der Dimension 60 x 60 x 2 mm

Herstellung der Mehrschichtformkörper

Die folgenden Mehrschichtformkörper der Dimension 60 x 60 x 2 mm wurden durch Hinterspritzen von Folien aus unverstärktem, transparentem Polyamid mit der erfindungsgemäßen Polyamid-Formmasse hergestellt. Die Herstellung erfolgte auf einer Spritzgussmaschine der Firma Arburg, Modell 420C 1000-250 unter Anwendung der oben für die 60 x 60 x 2 mm Platten beschriebenen Bedingungen. Dazu wurden zwei extrudierte Folien aus dem Polyamid 3 (PA 6I/6T/612/MACMI/MACMT/MACM12; Komponente (A2)), die je eine Dicke von 100 $\mu$m hatten, auf das Maß 60 x 60 x 0.1 mm zugeschnitten, in das Spritzgusswerkzeug eingelegt und nach Schließen des Werkzeuges die verbleibende Kavität zwischen die beiden Folien durch Einspritzen der erfindungsgemäßen Polyamid-Formmasse aus Beispiel B1 bzw. B3 gefüllt. Nach Abkühlen wurde der Mehrschichtformkörper entformt und Transparenz und Haze gemäß ASTM D1003 bestimmt. Die Einlegefolien aus Polyamid 3 können nach dem Spritzgussvorgang nicht mehr vom Mehrschichtformkörper gelöst werden, sondern sind stoffschlüssig mit der Formmasse aus den Beispielen B1 und B3 verbunden.

| Mehrschichtformkörper 1 | | |
| --- | --- | --- |
| Aufbau des Mehrschichtformkörpers der Dimension 60 x 60 x 2 mm | Außen Mittig Innen | Folie aus Polyamid 3 (o) Formmasse aus Beispiel B1 Folie aus Polyamid 3 (u) |
| Transparenz | % | 90 |
| Haze | % | 11 |
| Ra (o/u) (Platte 60x60x2 mm) | μm | 0,023/0,025 |
| Rz (o/u) (Platte 60x60x2 mm) | μm | 0,241/0,276 |

| Mehrschichtformkörper 2 | | |
| --- | --- | --- |
| Aufbau des Mehrschichtformkörpers der Dimension 60 x 60 x 2 mm | Außen Mittig Innen | Folie aus Polyamid 3 Formmasse aus Beispiel B3 Folie aus Polyamid 3 |
| Transparenz | % | 91 |
| Haze | % | 9,5 |
| Ra (o/u) (Platte 60x60x2 mm) | μm | 0,024/0,026 |
| Rz (o/u) (Platte 60x60x2 mm) | μm | 0,268/0,301 |

**4 Diskussion der Ergebnisse**

Tabelle 2 kann entnommen werden, dass die erfindungsgemäßen Polyamid-Formmassen gemäß der Beispiele B1 bis B3 einen sehr geringen Haze von 13 bis 17 % und eine hohe Transparenz von 89 bis 90 % aufweisen. Die Polyamid-Formmassen gemäß der Vergleichsbeispiele VB1 bis VB4 zeigen dahingegen einen deutlich höheren Haze im Bereich von 52 bis 95 %.

Die Polyamid-Formmassen gemäß B1 und B2 weisen einen Anteil von Polyamid (A1) in der Polyamidmischung (A) von 80 Gew.-% auf und das Verhältnis $\Delta2/\Delta1$ ist 2,67. Die ebenfalls erfindungsgemäße Polyamid-Formmasse gemäß B3 weist hingegen einen Überschuss von Polyamid (A2) in der Polyamidmischung (A) auf. Der Anteil von Polyamid (A2) in der Polyamidmischung (A) beträgt 61,2 Gew.-%, wobei das Verhältnis $\Delta2/\Delta1$ 0,027ist.

Der Vergleich der erfindungsgemäßen Beispiele B1 bis B3 mit den Vergleichsbeispielen VB2 bis VB3, die jeweils nur ein Polyamid (A1) oder (A2) enthalten, verdeutlicht, dass unbedingt eine Mischung aus den Polyamiden (A1) und (A2) notwendig ist, um gute Haze-Werte zu erreichen. Da die Oberflächenrauigkeit bei allen Beispielen auf gleich hohem Niveau gehalten werden konnte, rühren die Unterschiede in der Transparenz und im Haze eindeutig von der gewählten Zusammensetzung der Formmasse her.

Das Vergleichsbeispiel VB1 betrifft eine Polyamid-Formmasse die eine Mischung aus den Polyamiden (A1) und (A2) enthält. Dabei liegt die Komponente (A2) im Überschuss in der Mischung (A) vor und ihr Anteil beträgt 75 Gew.-%, wobei das Verhältnis $\Delta2/\Delta1$ 2,67 beträgt und damit die anspruchsgemäße Bedingung "Anteil der Komponente (A1) $\geq$ 50 Gew.-% in der Mischung (A) wenn $\Delta2/\Delta1 > 1$" nicht erfüllt. Der Haze der Polyamid-Formmasse gemäß VB1 liegt bei 47 % und damit deutlich über dem der erfindungsgemäßen Polyamid-Formmassen gemäß der Beispiele B1 bis B3, welche einer der anspruchsgemäßen Bedingungen "Anteil der Komponente (A1) $\geq$ 50 Gew.-% in der Mischung (A) wenn $\Delta2/\Delta1 > 1$" oder "Anteil der Komponente (A2) $\geq$ 50 Gew.-% in der Mischung (A) wenn $\Delta2/\Delta1 \leq 1$" erfüllen.

Die Mehrschichtformkörper 1 und 2 zeichnen sich durch eine gute Transparenz und einen niedrigen Haze aus. Trotz hochviskoser Ausgangsstoffe (Polyamide A1 und A2) resultieren Formkörper mit hoher Oberflächengüte, insbesondere niedrigem Mittenrauwert Ra und niedriger Rautiefe $R_z$. Durch die hohe Viskosität der Ausgangsstoffe wird andererseits die hohe Festigkeit und Zähigkeit der Formkörper sichergestellt, insbesondere sind die Schlagzähigkeit und die Bruchdehnung im Vergleich zu tiefviskosen Matrices verbessert.

Überraschenderweise gelingt es also nur durch die spezielle Merkmalskombination gemäß Anspruch 1 mit einem Glasfüller verstärkte Polyamid-Formmassen bereitzustellen, die neben guten mechanischen Eigenschaften auch sehr gute optische Eigenschaften, insbesondere einen geringen Haze, aufweisen.

**Patentansprüche**

1. Polyamid-Formmasse enthaltend die nachfolgenden Komponenten oder bestehend aus diesen Komponenten:

    (A) 50 bis 95 Gew.-% einer Mischung bestehend aus den Polyamiden (A1) und (A2), wobei

    (A1) mindestens ein transparentes, teilaromatisches Polyamid mit mehr als 35 Mol-% an Monomeren mit aromatischen Struktureinheiten, bezogen auf die Gesamtmenge an Diaminen und Dicarbonsäuren im Polyamid (A1) ist, welches amorph oder mikrokristallin ist; und
    (A2) mindestens ein transparentes, teilaromatisches Polyamid mit höchstens 35 Mol-% an Monomeren mit aromatischen Struktureinheiten, bezogen auf die Gesamtmenge an Diaminen und Dicarbonsäuren im Polyamid (A2), ist, welches amorph oder mikrokristallin ist;

    (B) 5 bis 50 Gew.-% mindestens eines Glasfüllers mit einem Brechungsindex, gemessen gemäß Methode B der ISO 489(1999-04), im Bereich von 1,540 bis 1,600;
    (C) 0 bis 10 Gew.-% mindestens eines Zusatzstoffes;

    wobei sich die Gewichtsanteile der Komponenten (A) bis (C) auf 100 Gew.-% ergänzen;
    wobei der Gehalt an (A1) in der Mischung (A) > 50 Gew.-% ist, falls das Verhältnis $\Delta2/\Delta1 > 1$ ist und der Gehalt an (A2) in der Mischung (A) > 50 Gew.-% ist, falls das Verhältnis $\Delta2/\Delta1 \leq 1$ ist, wobei gilt, dass $\Delta1 = n(A1) - n(B)$ ist und $\Delta2 = n(B) - n(A2)$ ist, wobei
    n(A1) für den Brechungsindex der Komponente A1, gemessen gemäß Methode A der ISO 489 (1999-04),
    n(A2) für den Brechungsindex der Komponente A2, gemessen gemäß Methode A der ISO 489 (1999-04), und
    n(B) für den Brechungsindex des Glasfüllers steht;
    wobei die transparenten Polyamide (A1) und (A2) eine Transparenz, gemessen an einem aus den Polyamiden (A1) bzw. (A2) hergestellten Formkörper (Platte mit der Dimension 60 x 60 x 2 mm) nach ASTM D1003 von mindestens 90 % und einen Haze, gemessen an einem aus den Polyamiden (A1) bzw. (A2) hergestellten Formkörper (Platte mit der Dimension 60 x 60 x 2 mm) nach ASTM D1003 von höchstens 3 % aufweisen;
    und wobei die Mischung (A) eine Transpararenz, gemessen an einem aus der Mischung (A) hergestellten Formkörper (Platte mit der Dimension 60 x 60 x 2 mm) nach ASTM D1003 von mindestens 88 % und einen Haze, gemessen an einem aus der Mischung (A) hergestellten Formkörper (Platte mit der Dimension 60 x 60 x 2 mm) nach ASTM D1003 von höchstens 5 % aufweist.

2. Polyamid-Formmasse nach Anspruch 1, **dadurch gekennzeichnet, dass** die Polyamidmischung (A) aus 51 bis 95 Gew.-% Polyamid (A1) und aus 5 bis 49 Gew.-% Polyamid (A2) besteht, falls $\Delta2/\Delta1 > 1$ ist;
    oder
    die Polyamidmischung (A) aus 51 bis 95 Gew.-% Polyamid (A2) und aus 5 bis 49 Gew.-% Polyamid (A1) besteht, falls $\Delta2/\Delta1 \leq 1$ ist.

3. Polyamid-Formmasse nach einem der vorhergehenden Ansprüche,
    **dadurch gekennzeichnet, dass** die transparenten Polyamide (A1) aus folgenden Monomeren aufgebaut sind:

    (a-A1) 10 bis 100 Mol-% an cycloaliphatischen Diaminen, bezogen auf die Gesamtmenge an Diaminen;
    (b-A1) 0 bis 90 Mol-% an Diaminen mit aromatischen Struktureinheiten, bezogen auf die Gesamtmenge an Diaminen;
    (c-A1) 0 bis 90 Mol-% an offenkettigen, aliphatischen Diaminen, bezogen auf die Gesamtmenge an Diaminen;
    (d-A1) 0 bis 65 Mol-% an offenkettigen, aliphatischen Dicarbonsäuren, bezogen auf die Gesamtmenge an Dicarbonsäuren;
    (e-A1) 35 bis 100 Mol-% an aromatischen Dicarbonsäuren, bezogen auf die Gesamtmenge an Dicarbonsäuren;
    (f-A1) 0 bis 65 Mol-% an cycloaliphatischen Dicarbonsäuren, bezogen auf die Gesamtmenge an Dicarbonsäuren;
    (g-A1) 0 bis 40 Gew.-% an Lactamen und/oder Aminocarbonsäuren mit 6 bis 12 Kohlenstoffatomen, bezogen auf die Gesamtmenge der Monomere (a-A1) bis (g-A1);
    wobei die Summe der Diamine (a-A1), (b-A1) und (c-A1) 100 Mol-% ergibt;
    wobei die Summe der Dicarbonsäuren (d-A1), (e-A1) und (f-A1) 100 Mol-% ergibt; und
    wobei die Summe der Monomeren (b-A1) und (e-A1) mehr als 35 Mol-%, bezogen auf die Summe der gesamten Diamine und der gesamten Dicarbonsäuren im Polyamid (A1), beträgt.

4. Polyamid-Formmasse nach einem der vorhergehenden Ansprüche, **dadurch gekennzeichnet, dass** das transparente Polyamid (A1) wenigstens 36 Mol-%an Monomeren mit aromatischen Struktureinheiten, bezogen auf die Gesamtmenge an Diaminen und Dicarbonsäuren im Polyamid (A1), enthält.

5. Polyamid-Formmasse nach einem der vorhergehenden Ansprüche, **dadurch gekennzeichnet, dass** die transparenten Polyamide (A2) aus den folgenden Monomeren aufgebaut sind:

(a-A2) 20 bis 100 Mol-% an cycloaliphatischen Diaminen, bezogen auf die Gesamtmenge an Diaminen;
(b-A2) 0 bis 70 Mol-% an Diaminen mit aromatischen Struktureinheiten, bezogen auf die Gesamtmenge an Diaminen;
(c-A2) 0 bis 80 Mol-% an offenkettigen, aliphatischen Diamine, bezogen auf die Gesamtmenge an Diaminen;
(d-A2) 20 bis 100 Mol-% an offenkettigen, aliphatischen Dicarbonsäuren, bezogen auf die Gesamtmenge an Dicarbonsäuren;
(e-A2) 0 bis 70 Mol-% an aromatischen Dicarbonsäuren, bezogen auf die Gesamtmenge an Dicarbonsäuren;
(f-A2) 0 bis 70 Mol-% an cycloaliphatischen Dicarbonsäuren, bezogen auf die Gesamtmenge an Dicarbonsäuren;
(g-A2) 0 bis 40 Gew.-% Lactame und/oder Aminocarbonsäuren mit 6 bis 12 Kohlenstoffatomen, bezogen auf die Gesamtmenge der Monomere (a-A2) bis (g-A2);
wobei die Summe der Diamine (a-A2), (b-A2) und (c-A2) 100 Mol-% ergibt;
wobei die Summe der Dicarbonsäuren (d-A2), (e-A2) und (f-A2) 100 Mol-% ergibt; und
wobei die Summe der Monomeren (b-A2) und (e-A2) höchstens 35 Mol-%, bezogen auf die Summe der gesamten Diamine und der gesamten Dicarbonsäuren im Polyamid (A2), beträgt.

6. Polyamid-Formmasse nach einem der vorhergehenden Ansprüche, **dadurch gekennzeichnet, dass** das transparente Polyamid (A2) höchstens 33 Mol-%an Monomeren mit aromatischen Struktureinheiten, bezogen auf die Gesamtmenge an Diaminen und Dicarbonsäuren im Polyamid (A2), enthält.

7. Polyamid-Formmasse nach einem der vorhergehenden Ansprüche, **dadurch gekennzeichnet, dass** die Monomere mit aromatischen Struktureinheiten für die transparenten Polyamide (A1) und (A2) ausgewählt sind aus der Gruppe bestehend aus Terephthalsäure, Isophthalsäure, Naphthalindicarbonsäure (NDA), Biphenyl-dicarbonsäuren, 1,5-Anthracendicarbonsäure, p-Terphenylen-4,4"-dicarbonsäure und 2,5-Pyridindicarbonsäure, Xylylendiamin und Mischungen davon.

8. Polyamid-Formmasse nach einem der vorhergehenden Ansprüche, **dadurch gekennzeichnet, dass**
die an einem aus der Polyamid-Formmasse hergestellten Formkörper (Platte mit der Dimension 60 x 60 x 2 mm) nach ASTM D1003 gemessene Transparenz mindestens 80 %beträgt; und/oder der an einem aus der Polyamid-Formmasse hergestellten Formkörper (Platte mit der Dimension 60 x 60 x 2 mm) nach ASTM D1003 gemessene Haze maximal 40 %beträgt; und/oder der an einem aus der Polyamid-Formmasse hergestellte Formkörper (Platte mit der Dimension 60 x 60 x 2 mm) einen nach DIN EN ISO 4287 (2010-07) mittels einer MarSurf XR1 Surface Measuring Station bestimmten arithmetischen Mittenrauwert Ra von höchstens 0,12 $\mu$m und/oder eine Rautiefe $R_z$ von höchstens 1,50 $\mu$m aufweist.

9. Polyamid-Formmasse nach einem der Ansprüche 4 bis 8, **dadurch gekennzeichnet, dass**
das cycloaliphatische Diamin (a-A1) und/oder (a-A2) ausgewählt ist aus der Gruppe bestehend aus Bis-(4-amino-3-methyl-cyclohexyl)-methan, Bis-(4-amino-cyclohexyl)-methan, Bis-(4-amino-3-ethyl-cyclohexyl)-methan, Bis-(4-amino-3,5-dimethyl-cyclohexyl)-methan, 2,6-Norbornandiamin, 1,3-Diaminocyclohexan, 1,4-Diaminocyclohexan, Isophorondiamin, 1,3-Bis-(aminomethyl)cyclohexan, 1,4-Bis-(aminomethyl)cyclohexan, 2,2-(4,4'-Diaminodicyclohexyl)propan und Mischungen daraus;
und/oder
das aromatische Diamin (b-A1) und/oder (b-A2) ausgewählt ist aus der Gruppe bestehend aus Xylylendiamin und Mischungen daraus; und/oder
das Diamin (c-A1) und/oder (c-A2) ausgewählt ist aus der Gruppe bestehend aus 1,4-Butandiamin, 1,5-Pentandiamin, 2-Methyl-1,5-pentandiamin, Hexandiamin 2,2,4-Trimethyl-1,6-hexamethylendiamin, 2,4,4-Trimethyl-1,6-hexamethylendiamin, Nonandiamin 2-Methyl-1,8-octandiamin, 1,10-Decandiamin, 1,11-Undecandiamin, 1,12-Dodecandiamin, 1,13-Tridecandiamin, 1,14-Tetradecandiamin, 1,18-Octadecandiamin, und Mischungen daraus;
und/oder
die aliphatische Dicarbonsäure (d-A1) und/oder (d-A2) ausgewählt ist aus der Gruppe bestehend aus 1,6-Hexandisäure, 1,9-Nonandisäure, 1,10-Decandisäure, 1,11-Undecandisäure, 1,12-Dodecandisäure, 1,13-Tridecandisäure, 1,14-Tetradecandisäure, 1,16-Hexadecandisäure, 1,18-Octadecandisäure, und Mischungen daraus;
und/oder

die aromatische Dicarbonsäure (e-A1) und/oder (e-A2) ausgewählt ist aus der Gruppe bestehend aus Terephthalsäure, Isophthalsäure, Naphthalindicarbonsäuren (NDA), Biphenyl-dicarbonsäuren, 1,5-Anthracendicarbonsäure, p-Terphenylen-4,4"-dicarbonsäure und 2,5-Pyridindicarbonsäure und Mischungen davon;
und/oder
die cycloaliphatische Dicarbonsäure (f-A1) und/oder (f-A2) ausgewählt ist aus der Gruppe bestehend aus 1,3-Cyclopentandicarbonsäure, 1,3-Cyclohexandicarbonsäure, 1,4-Cyclohexandicarbonsäure, 2,3-Norbornandicarbonsäure, 2,6-Norbornandicarbonsäure und Mischungen daraus;
und/oder
das Lactam und/oder die α,ω-Aminocarbonsäuren (g-A1) und/oder (g-A2) ausgewählt ist aus der Gruppe bestehend aus m-Aminobenzoesäure, p-Aminobenzoesäure, Caprolactam (CL), α,ω-Aminocapronsäure, α,ω-Aminoheptansäure, α,ω-Aminoctansäure, α,ω-Aminononansäure, α,ω-Aminodecansäure, α,ω-Aminoundecansäure (AUA), Laurinlactam (LL) und α,ω-Aminododecansäure (ADA)und Mischungen daraus.

10. Polyamid-Formmasse nach einem der vorhergehenden Ansprüche, **dadurch gekennzeichnet, dass**
das Polyamid (A1) ausgewählt ist aus der Gruppe bestehend aus PA MACMI/12, PA MACMI/1012, PA MACMT/12, PA MACMI/MACMT/12, PA MACMI/MACMT, PA MACMI/MACMT/MACM12, PA 6I/6T/MACMI/MACMT, PA 6I/6T/MACMI/MACMT/12, PA 6I/MACMI, PA 6I/6T/PACMI/PACMT, PA 6I/612/MACMI/MACM12, PA 6T/612/MACMT/MACM12, PA 6I/6T/612/MACMI/MACMT/MACM12, PA 6I/6T/MACMI/MACMT/PACMI/PACMT, PA 6I/6T/MACMI/MACMT/PACMI/PACMT/12, PA MACMI/MACMT/MACM36, PA MACMI/MACM36, PA MACMT/MACM36, PA 12/PACMI, PA 12/MACMT, PA 6/PACMT, PA 6/PACMI, PA MXDI, PA MXDI/MXD6, PA MXDI/MXD10, PA MXDI/MXDT, PA MXDI/MACMI, PA MXDI/MXDT/MACMI/MACMT, PA 6I/6T/BACI/BACT, PA MACMI/MACMT/BACI/BACT, PA 6I/6T/MACMI/MACMT/BACI/BACT und Mischungen hiervon, wobei diese Polyamide mehr als 35 mol-% an Monomeren mit aromatischen Struktureinheiten, bezogen auf die Gesamtmenge an Diaminen und Dicarbonsäuren, aufweisen,
und/oder das Polyamid (A2) ausgewählt ist aus der Gruppe bestehend aus PA MACM9, PA MACM10, PA MACM11, PA MACM12, PA MACM13, PA MACM14, PA MACM16, PA MACM18, PA MACM36, PA PACM9, PA PACM10, PA PACM11, PA PACM12, PA PACM13, PA PACM14, PA PACM16, PA PACM18, PA PACM36, PATMDC9, PA TMDC10, PA TMDC11, PA TMDC12, PA TMDC13, PA TMDC14, PA TMDC15, PA TMDC16, PA TMDC17, PA TMDC18, PA TMDC36 oder Copolyamide wie PA MACM10/1010, PA MACM10/PACM10, PA MACM12/1012, PA MACM14/1014, PA PACM10/1010, PA PACM12/1012, PA PACM14/1014, PA MACM12/PACM12, PA MACM14/PACM14, PA MACMI/MACMT/MACM12, PA 6I/612/MACMI/MACM12, PA 6T/612/MACMT/MACM12, PA 6I/6T/612/MACMI/MACMT/MACM12, PA MACMI/MACMT/MACM36, PA MACMI/MACM36, PA MACMT/MACM36, PA MACMI/MACM12, PA MACMT/MACM12, PA MACMI/MACMT/10I/10T/1012, PA 6I/6T/612/PACMI/PACMT/PACM12, PA 6I/612/MACMI/MACM12, PA 6T/612/MACMT/MACM12, PA 10T/1012/MACMT/MACM12, PA 10I/1012/MACMI/MACM12, PA 6I/6T/MACMI/MACMT/PACMI/PACMT/MACM 12/PACM12, PA MACMI/PACMI/MACM12/PACM12, PA MACMT/PACMT/MACM12/PACM12, PA MACMI/PACMT/MACM12/PACM12, PA MACMI/MACM36, PA MACMI/MACMT/MaCM36, PA 1012/MACMI, PA 1012/MACMT, 1010/MACMI, PA 1010/MACMT, PA 612/MACMT, PA 610/MACMT, PA 612/MACMI, PA 610/MACMI,PA 1012/PACMI, PA 1012/PACMT, PA 1010/PACMI, PA 1010/PACMT, PA 612/PACMT, PA 612/PACMI, PA 610/PACMT, PA 610/PACMI und Mischungen hiervon;
wobei diese Polyamide höchstens 35 mol-% an Monomeren mit aromatischen Struktureinheiten, bezogen auf die Gesamtmenge an Diaminen und Dicarbonsäuren, aufweisen.

11. Polyamid-Formmasse nach einem der vorhergehenden Ansprüche, **dadurch gekennzeichnet, dass**
der mindestens eine Glasfüller (B) ausgewählt ist aus der Gruppe bestehend aus Glasfasern, gemahlenen Glasfasern, Glaspartikeln, Glas-Flakes, Glas-Kugeln, Glas-Hohlkugeln und Kombinationen hiervon.

12. Polyamid-Formmasse nach einem der vorhergehenden Ansprüche, **dadurch gekennzeichnet, dass**
die Glassorte des mindestens einen Glasfüllers (B) ausgewählt ist aus der Gruppe bestehend aus E-Glas, ECR-Glas, R-Glas und AR-Glas.

13. Polyamid-Formmasse nach einem der vorhergehenden Ansprüche, **dadurch gekennzeichnet, dass** der mindestens eine Zusatzstoff (C) ausgewählt ist aus der Gruppe bestehend aus anorganischen und organischen Stabilisatoren, weniger als 5 Gew.-% bezogen auf die Gesamtmasse der Polyamid-Formmasse an teilkristallinen Polyamiden, Schlagzähmodifikatoren, Gleitmitteln, Farbstoffen, Markierungsmitteln, photochromen Agenzien, Entformungsmitteln, Kondensationskatalysatoren, Kettenreglern,Entschäumern, Antiblockmitteln, optischen Aufhellern, halogenfreien Flammschutzmitteln, natürlichen Schichtsilikaten, synthetischen Schichtsilikaten, nanoskaligen Füllstoffen mit einer Partikelgröße von maximal 100 nm und Mischungen davon.

**14.** Polyamid-Formmasse nach einem der vorhergehenden Ansprüche, **dadurch gekennzeichnet, dass**
der Anteil von Komponente (A) in der Polyamid-Formmasse im Bereich von 55 bis 90 Gew.-% bezogen auf die Summe der Komponenten (A) bis (C), liegt, und/oder
der Anteil von Komponente (B) in der Polyamid-Formmasse im Bereich von 10 bis 40 Gew.-% bezogen auf die Summe der Komponenten (A) bis (C), liegt, und/oder
der Anteil von Komponente (C) in der Formmasse im Bereich von 0 bis 7 Gew.-% bezogen auf die Summe der Komponenten (A) bis (C), liegt, und/oder
die Polyamid-Formmasse keine anderen Bestandteile als die Komponenten (A) bis (C) enthält.

**15.** Polyamid-Formmasse nach einem der vorhergehenden Ansprüche, **dadurch gekennzeichnet,**
**dass** die Komponente (A1) eine nach ISO 11357-2 bestimmte Glasübergangstemperatur von mindestens 135°C aufweist; und/oder dass die Komponente (A2) eine nach ISO 11357-2 bestimmte Glasübergangstemperatur von mindestens 135°C aufweist; und/oder dass die Mischung (A) eine nach ISO 11357-2 bestimmte Glasübergangstemperatur von mindestens 130°C aufweist; und/oder dass die Polyamidformmasse eine nach ISO 11357-2 bestimmte Glasübergangstemperatur von mindestens 130°C aufweist.

**16.** Formkörper enthaltend eine oder bestehend aus einer Polyamid-Formmasse nach einem der Ansprüche 1 bis 15.

**17.** Formkörper nach Anspruch 16, **dadurch gekennzeichnet, dass** es sich um einen mehrschichtigen Formkörper handelt.

**18.** Formkörper nach einem der Ansprüche 17, **dadurch gekennzeichnet, dass** es sich um einen mehrschichtigen Formkörper gebildet aus einer Schicht (S1) enthaltend eine Polyamid-Formmasse nach einem der Ansprüche 1 bis 16 und mindestens einer weiteren Schicht (S2), (S3) oder (S4), die frei von Glasfüller (B) ist oder die einen im Vergleich zur Schicht (S1) reduzierten Anteil an Glasfüller (B) aufweist, handelt.


**Claims**

**1.** A polyamide molding compound comprising the following components or consisting of the following components:

(A) 50 to 95 wt% of a mixture consisting of the polyamides (A1) and (A2), wherein

(A1) is at least one transparent, semi-aromatic polyamide having more than 35 mol% of monomers having aromatic structural units, related to the total quantity of diamines and dicarboxylic acids in the polyamide (A1) that is amorphous or microcrystalline; and
(A2) is at least one transparent, semi-aromatic polyamide having at most 35 mol% of monomers having aromatic structural units, related to the total quantity of diamines and dicarboxylic acids in the polyamide (A2) that is amorphous or microcrystalline;

(B) 5 to 50 wt% of at least one glass filler having a refractive index in the range from 1.540 to 1.600, measured in accordance with method B of ISO 489 (1999-04);
(C) 0 to 10 wt% of at least one additive;

wherein the weight proportions of the components (A) to (C) add up to 100% by weight;
wherein the content of (A1) in the mixture (A) is > 50 wt%, if the ratio is $\Delta2/\Delta1 > 1$ and the content of (A2) in the mixture (A) is > 50 wt%, if the ratio is $\Delta2/\Delta1 \leq 1$, where $\Delta1 = n$ (A1) - n(B) and $\Delta2 = n(B) - n(A2)$ applies; wherein n(A1) stands for the refractive index of component A1, measured in accordance with method A of ISO 489 (1999-04), n(A2) stands for the refractive index of component A1, measured in accordance with method A of ISO 489 (1999-04);
wherein the transparent polyamides (A1) and (A2) have a transparency, measured in accordance with ASTM D1003 at a molded body (plate with the dimension 60 x 60 x 2 mm) produced from the polyamides (A1) or (A2), respectively, of at least 90% and a haze, measured in accordance with ASTM D1003 at a molded body (plate with the dimension 60 x 60 x 2 mm) produced from the polyamides (A1) or (A2), respectively, of at most 3%;
and wherein the mixture (A) has a transparency, measured in accordance with ASTM D1003 at a molded body (plate with the dimension 60 x 60 x 2 mm) produced from the mixture of at least 88% and a haze, measured in accordance with ASTM D1003 at a molded body (plate with the dimension 60 x 60 x 2 mm) produced from the mixture of at most 5%.

2. A polyamide molding compound in accordance with claim 1, **characterized in that**
the polyamide mixture (A) comprises 51 to 95 wt% of polyamide (A1) and comprises 5 to 49 wt% of polyamide (A2) if $\Delta2/\Delta1 > 1$; and/or
the polyamide mixture (A) comprises 51 to 95 wt% of polyamide (A2) and comprises 5 to 49 wt% of polyamide (A2) if $\Delta2/\Delta1 \leq 1$.

3. A polyamide molding compound in accordance with one of the preceding claims, **characterized in that** the transparent polyamides (A1) are made up of the following monomers:

(a-A1) 10 to 100 mol% of cycloaliphatic diamines, with respect to the total quantity of diamines;
(b-A1) 0 to 90 mol% of diamines having aromatic structural units, with respect to the total quantity of diamines;
(c-A1) 0 to 90 mol% of open-chain cycloaliphatic diamines, with respect to the total quantity of diamines;
(d-A1) 0 to 65 mol% of open-chain aliphatic dicarboxylic acids, with respect to the total quantity of dicarboxylic acids;
(e-A1) 35 to 100 mol% of aromatic dicarboxylic acids, with respect to the total quantity of dicarboxylic acids;
(f-A1) 0 to 65 mol% of cycloaliphatic dicarboxylic acids, with respect to the total quantity of dicarboxylic acids;
(g-A1) 0 to 40 wt% of lactams and/or aminocarboxylic acids having 6 to 12 carbon atoms, with respect to the total quantity of the monomers (a-A1) to (g-A1),
where the sum of the diamines (a-A1), (b-A1), and (c-A1) produces 100 mol%;
where the sum of the dicarboxylic acids (d-A1), (e-A1), and (f-A1) produces 100 mol%; and
where the sum of the monomers (b-A1) and (e-A1) amounts to more than 35 mol%, with respect to the sum of the total diamines and of the total dicarboxylic acids in the polyamide (A1).

4. A polyamide molding compound in accordance with one of the preceding claims, **characterized in that** the transparent polyamide (A1) comprises at least 36 mol% of monomers having aromatic structural units, with respect to the total quantity of diamines and dicarboxylic acids in the polyamide (A1).

5. A polyamide molding compound in accordance with one of the preceding claims, **characterized in that** the transparent polyamides (A2) are made up of the following monomers:

(a-A2) 20 to 100 mol% of cycloaliphatic diamines, with respect to the total quantity of diamines;
(b-A2) 0 to 70 mol% of diamines having aromatic structural units, with respect to the tot-Al quantity of diamines;
(c-A2) 0 to 80 mol% of open-chain aliphatic diamines, with respect to the total quantity of diamines;
(d-A2) 20 to 100 mol% of open-chain aliphatic dicarboxylic acids, with respect to the total quantity of dicarboxylic acids;
(e-A2) 0 to 70 mol% of aromatic dicarboxylic acids, with respect to the total quantity of dicarboxylic acids;
(f-A2) 0 to 70 mol% of cycloaliphatic dicarboxylic acids, with respect to the total quantity of dicarboxylic acids;
(g-A2) 0 to 40 wt% of lactams and/or aminocarboxylic acids having 6 to 12 carbon atoms, with respect to the total quantity of the monomers (a-A2) to (g-A2),
where the sum of the diamines (a-A2), (b-A2), and (c-A2) produces 100 mol%;
where the sum of the dicarboxylic acids (d-A2), (e-A2), and (f-A2) produces 100 mol%; and
where the sum of the monomers (b-A2) and (e-A2) amounts to at most 35 mol%, with respect to the sum of the total diamines and of the total dicarboxylic acids in the polyamide (A2).

6. A polyamide molding compound in accordance with one of the preceding claims, **characterized in that** the transparent polyamide (A2) comprises at most 33 mol% of monomers having aromatic structural units, with respect to the total quantity of diamines and dicarboxylic acids in the polyamide (A2).

7. A polyamide molding compound in accordance with one of the preceding claims, **characterized in that** the monomers having aromatic structural units for the transparent polyamides (A1) and (A2) are selected from the group comprising terephthalic acid, isophthalic acid, naphthalenedicarboxylic acid (NDA), biphenyldicarboxylic acid, 1,5-anthracene dicarboxylic acid, p-terphenylene-4,4"- dicarboxylic acid, and 2,5-pyridine dicarboxylic acid, xylylenediamine, and mixtures thereof.

8. A polyamide molding compound in accordance with one of the preceding claims, **characterized in that**
the transparency measured in accordance with ASTM D1003 at a molded body (plate with the dimension 60 x 60 x 2 mm) manufactured from the polyamide molding compound amounts to at least 80%; and/or
the haze measured in accordance with ASTM D1003 at a molded body (plate with the dimension 60 x 60 x 2 mm) manufactured from the polyamide molding compound amounts to a maximum of 40%; and/or the molded body (plate with the dimension 60 x 60 x 2 mm) produced from the polyamide molding compound in the form of glass fibershas an arithmetical mean roughness Ra determined in accordance with DIN EN ISO 4287 (2010-07) by means of a MarSurf XR1 Surface Measuring Station of at most 0.12 $\mu$m, and/or has a surface roughness $R_z$ of at most 1.50 $\mu$m.

9. A polyamide molding compound in accordance with one of the claims 4 to 8, **characterized in that**
the cycloaliphatic diamine (a-A1) and/or (a-A2) is/are selected from the group comprising bis(4-amino-3-methylcyclohexyl)methane, bis-(4--aminocyclohexyl)methane, bis-(4-amino-3-ethylcyclohexyl)methane, bis-(4-amino-3,5,-dimethylcyclohexyl)methane, 2,6-norbornane diamine, 1,3-diaminocyclohexane, 1,4-diaminocyclohexanediamine, isophorone diamine, 1,3-bis-(aminomethyl)cyclohexane, 1,4-bis-(aminomethyl)cyclohexane, 2,2-(4,4'-diaminodicyclohexyl)propane, and mixtures thereof;
and/or
the aromatic diamine (b-A1) and/or (b-A2) is/are selected from the group comprising xylylenediamine and mixtures thereof;
and/or
the diamine (c-A1) and/or (c-A2) is/are selected from the group comprising 1,4-butanediamine, 1,5-pentanediamine, 2-methyl-1,5-pentanediamine, hexanediamine, 2,2,4-trimethyl-1,6-hexamethylenediamine, 2,4,4-trimethyl-1,6-hexamethylenediamine, nonanediamine, 2-methyl-1,8-octanediamine, 1,10-decanediamine, 1,11-undecanediamine, 1,12-dodecanediamine, 1,13-trideceanediamine, 1,14-tetradecanediamine, 1,18-octadecanediamine, and mixtures thereof;
and/or
the aliphatic dicarboxylic acid (d-A1) and/or (d-A2) is/are selected from the group comprising 1,6-apidic acid, 1,9-nonanedioic acid, 1,10-decanedioic acid, 1,11-undecanedioic acid, 1,12 dodecanedioic acid, 1,13-tricanedioic acid, 1,14-tetradecanedioic acid, 1,16-hexadecanedioic acid, 1,18-octadecanedioic acid, and mixtures thereof;
and/or
the aromatic dicarboxylic acid (e-A1) and/or (e-A2) is/are selected from the group comprising terephthalic acid, isophthalic acid, naphthalenedicarboxylic acid (NDA), biphenyldicarboxylic acid, 1,5-anthracene dicarboxylic acid, p-terphenylene-4,4"-dicarboxylic acid, and 2,5-pyridinedicarboxylic acid, and mixtures thereof; and/or
the cycloaliphatic dicarboxylic acid (f-A1) and/or (f-A2) is/are selected from the group comprising 1,3-cyclopentanedicarboxylic acid, 1,3-cyclohexanedicarboxylic acid, 1,4-cyclohexanedicarboxylic acid, 2,3-norbornanedicarboxylic acid, 2,6-norbornanedicarboxylic acid, and mixtures thereof;
and/or
the lactam and/or the $\alpha,\omega$-aminocarboxylic acids (g-A1) and/or (g-A2) is/are selected from the group comprising m-aminobenzoic acid, p-aminobenzoic acid, caprolactam (CL), $\alpha,\omega$-aminocaproic acid, $\alpha,\omega$-aminoheptanoic acid, $\alpha,\omega$-aminooctanoic acid, $\alpha,\omega$-aminononanoic acid, $\alpha,\omega$-aminodecanoic acid, $\alpha,\omega$-aminoundecanoic acid (AUA), laurollactam (LL), and $\alpha,\omega$-aminododecanoic acid (ADA) and mixtures thereof.

10. A polyamide molding compound in accordance with one of the preceding claims, **characterized in that** the polyamide (A1) is selected from the group comprising PA MACMI/12, PA MACMI/1012, PA MACMT/12, PA MACMI/MACMT/12, PA MACMI/MACMT, PA MACMI/MACMT/MACM12, PA 6I/6T/MACMI/MACMT, PA 6I/6T/MACMI/MACMT/12, PA 6I/MACMI, PA 6I/6T/PACMI/PACMT, PA 6I/612/MACMI/MACM12, PA 6T/612/MACMT/MACM12, PA 6I/6T/612/MACMI/MACMT/MACM12, PA 6I/6T/MACMI/MACMT/PACMI/PACMT, PA 6I/6T/MACMI/MACMT/PACMI/PACMT/12, PA MACMI/MACMT/MACM36, PA MACMI/MACM36, PA MACMT/MACM36, PA 12/PACMI, PA 12/MACMT, PA 6/PACMT, PA 6/PACMI, PA MXDI, PA MXDI/MXD6, PA MXDI/MXD10, PA MXDI/MXDT, PA MXDI/MACMI, PA MXDI/MXDT/MACMI/MACMT, PA 6I/6T/BACI/BACT, PA MACMI/MACMT/BACI/BACT, PA 6I/6T/MACMI/MACMT/BACI/BACT and mixtures thereof, wherein these polyamides comprise more than 35 mol% of monomers having aromatic structural units, with respect to the total quantity of diamines and dicarboxylic acids; and/or the polyamide (A2) is selected from the group comprising PA MACM9, PA MACM10, PA MACM11, PA MACM12, PA MACM13, PA MACM14, PA MACM15, PA MACM16, PA MACM17, PA MACM18, PA MACM36, PA PACM9, PA PACM10, PA PACM11, PA PACM12, PA PACM13, PA PACM14, PACM15, PA PACM16, PACM17, PA PACM18, PA PACM36, PA TMDC9, PA TMDC10, PA TMDC11, PA TMDC12, PA TMDC13, PA TMDC14, PA TMDC15, PA TMDC16, PA TMDC17, PA TMDC18, PA TMDC36 or copolyamides such as PA MACM10/1010, PA MACM10/PACM10, PA MACM12/1012, PA MACM14/1014, PA PACM10/1010, PA PACM12/1012, PA PACM14/1014, PA MACM12/PACM12, PA MACM14/PACM14, PA MACMI/MACMT/MACM12, PA 6I/612/MACMI/MACM12, PA 6T/612/MACMT/MACM12, PA 6I/6T/612/MACMI/MACMT/MACM12, PA MACMI/MACMT/MACM36, PA MACMI/MACM36, PA MACMT/MACM36, PA MACMI/MACM12, PA MACMT/MACM12, PA MACMI/MACMT/10I/10T/1012, PA 6I/6T/612/PACMI/PACMT/PACM12, PA 6I/612/MACMI/MACM12, PA 6T/612/MACMT/MACM12, PA 10T/1012/MACMT/MACM12, PA 10I/1012/MACMI/MACM12, PA6I/6T/MACMI/MACMT/PACMI/PACMT/MACM12/PACM12, PA MACMI/PACMI/MACM12/PACM12, PA MACMT/PACMT/MACM12/PACM12, PA MACMI/PACMT/MACM12/PACM12, PA MACMI/MACM36, PA MACMI/MACMT/MaCM36, PA 1012/MACMI, PA 1012/MACMT, 1010/MACMI, PA 1010/MACMT, PA 612/MACMT, PA 610/MACMT, PA 612/MACMI, PA 610/MACMI,PA 1012/PACMI, PA 1012/PACMT, PA 1010/PACMI, PA 1010/PACMT, PA 612/PACMT, PA 612/PACMI, PA 610/PACMT, PA 610/PACMI and mixtures thereof;
wherein these polyamides have at most 35 mol% of monomers having aromatic structural units, with respect to the total quantity of diamines and dicarboxylic acids.

11. A polyamide molding compound in accordance with one of the preceding claims, **characterized in that** the at least one glass filler (B) is selected from the group comprising glass fibers, ground glass fibers, glass particles, glass flakes, glass spheres, hollow glass spheres, and combinations thereof.

12. A polyamide molding compound in accordance with one of the preceding claims, **characterized in that** the glass type of the at least one glass filler (B) is selected from the group comprising E-glass, E-CR-glass, R-glass and AR-glass.

13. A polyamide molding compound in accordance with one of the preceding claims, **characterized in that** the at least one additive (C) is selected from the group comprising inorganic and organic stabilizers, less than 5 wt% with respect to the total mass of the polyamide molding compound of semi-crystalline polyamides, impact modifiers, lubricants, colorants, marking means, photochromic agents, demolding means, condensation catalysts, chain regulators, anti-foaming agents, anti-blocking agents, optical brighteners, non-halogen flame retardants, natural sheet silicates, synthetic sheet silicates, nanoscale fillers having a particle size of a maximum of 100 nm, and mixtures thereof.

14. A polyamide molding compound in accordance with one of the preceding claims, **characterized in that** the proportion of component (A) in the polyamide molding compound is in the range from 55 to 90 wt% with respect to the sum of the components (A) to (C); and/or
the proportion of component (B) in the polyamide molding compound is in the range from 10 to 40 wt% with respect to the sum of the components (A) to (C); and/or
the proportion of component (C) in the molding compound is in the range from 0 to 7 wt% with respect to the sum of the components (A) to (C); and/or
the polyamide molding compound does not contain any other components than components (A) to (C).

15. A polyamide molding compound in accordance with one of the preceding claims, **characterized in that** component (A1) has a glass transition temperature determined in accordance with ISO 11357-2 of at least 135°C; and/or
**in that** component (A2) has a glass transition temperature determined in accordance with ISO 11357-2 of at least 135°C; and/or
**in that** mixture (A) has a glass transition temperature determined in accordance with ISO 11357-2 of at least 130°C; and/or
**in that** the polyamide molding compound has a glass transition temperature determined in accordance with ISO 11357-2 of at least 130°C.

16. A molded body comprising or consisting of a polyamide molding compound in accordance with one of the claims 1 to 15.

17. A molded body in accordance with claim 16, **characterized in that** it is a multilayer molded body.

18. A molded body in accordance with claim 17, **characterized in that** it is a multilayer molded body formed from a layer (S1) comprising a polyamide molding compound in accordance with one of the claims 1 to 16 and at least one further layer (S2), (S3), or (S4) that is free of glass filler (B) or that has a proportion of glass filler (B) reduced in comparison with the layer (S1)

**Revendications**

1. Mélange à mouler de polyamides contenant les composants suivants ou constitué de ces composants :

(A) 50 à 95 % en poids d'un mélange consistant en les polyamides (A1) et (A2), dans lequel

(A1) est au moins un polyamide transparent, partiellement aromatique, ayant plus de 35 % en moles de monomères ayant des motifs structuraux aromatiques, par rapport à la quantité totale des diamines et des acides dicarboxyliques se trouvant dans le polyamide (A1), lequel est amorphe ou microcristallin ; et
(A2) est au moins un polyamide transparent, partiellement aromatique, ayant au plus 35 % en moles de monomères ayant des motifs structuraux aromatiques, par rapport à la quantité totale des diamines et des acides dicarboxyliques se trouvant dans le polyamide (A2), lequel est amorphe ou microcristallin ;

(B) 5 à 50 % en poids d'au moins une charge de verre ayant un indice de réfraction, mesuré par la méthode B d'ISO 489(1999-04), compris dans la plage de 1,540 à 1,600 ;
(C) 0 à 10 % en poids d'au moins un additif ;

la somme des parties en poids des composants (A) à (C) étant de 100 % en poids ;
dans lequel la teneur en (A1) du mélange (A) est > 50 % en poids, si le rapport Δ2/Δ1 est >1, et la teneur en (A2) du mélange (A) est > 50 % en poids, si le rapport Δ2/Δ1 est ≤ 1, et Δ1 = n(A1)-n(B) et Δ2 = n(B)-n(A2),
n(A1) représentant l'indice de réfraction du composant A1, mesuré par la méthode A d'ISO 489(1999-04),
n(A2) représentant l'indice de réfraction du composant A2, mesuré par la méthode A d'ISO 489(1999-04), et
n(B) représente l'indice de réfraction de la charge de verre ;
les polyamides transparents (A1) et (A2) présentant une transparence, mesurée sur un objet moulé fabriqué à partir des polyamides respectivement (A1) et (A2) (plaque de dimensions 60 x 60 x 2 mm) selon ASTM D1003 d'au moins 90 % et un trouble, mesuré sur un objet moulé fabriqué à partir des polyamides respectivement (A1) et (A2) (plaque de dimensions 60 x 60 x 2 mm) selon ASTM D1003 d'au plus 3 % ;
et le mélange (A) présentant une transparence, mesurée sur un objet moulé fabriqué à partir du mélange (A) (plaque de dimensions (60 x 60 x 2 mm) selon ASTM D1003 d'au moins 88 % et un trouble, mesuré sur un objet moulé fabriqué à partir du mélange (A) (plaque de dimensions 60 x 60 x 2 mm) selon ASTM D1003 d'au moins 5 %.

2. Mélange à mouler de polyamides selon la revendication 1, **caractérisé en ce que** le mélange de polyamides (A) est constitué de 51 à 95 % en poids du polyamide (A1) et de 5 à 49 % en poids du polyamide (A2), si Δ2/Δ1 > 1 ; ou
le mélange de polyamides (A) est constitué de 51 à 95 % en poids du polyamide (A2) et de 5 à 49 % en poids du polyamide (A1), si Δ2/Δ1 ≤ 1.

3. Mélange à mouler de polyamides selon l'une des revendications précédentes, **caractérisé en ce que** les polyamides transparents (A1) sont constitués des monomères suivants :

(a-A1) 10 à 100 % en moles de diamines cycloaliphatiques, par rapport à la quantité totale des diamines ;
(b-A1) 0 à 90 % en moles de diamines ayant des motifs structuraux aromatiques, par rapport à la quantité totale des diamines ;
(c-A1) 0 à 90 % en moles de diamines aliphatiques à chaîne ouverte, par rapport à la quantité totale des diamines ;
(d-A1) 0 à 65 % en moles d'acides dicarboxyliques aliphatiques à chaîne ouverte, par rapport à la quantité totale des acides dicarboxyliques ;
(e-A1) 35 à 100 % en moles d'acides dicarboxyliques aromatiques, par rapport à la quantité totale des acides dicarboxyliques ;
(f-A1) 0 à 65 % en moles d'acides dicarboxyliques cycloaliphatiques, par rapport à la quantité totale des acides dicarboxyliques ;
(g-A1) 0 à 40 % en poids de lactames et/ou d'acides aminocarboxyliques ayant 6 à 12 atomes de carbone, par rapport à la quantité totale des monomères (a-A1) à (g-A1) ;

dans lequel la somme des diamines (a-A1), (b-A1) et (c-A1) est de 100 % en moles ;
dans lequel la somme des acides dicarboxyliques (d-A1), (e-A1) et (f-A1) est de 100 % en moles ; et
dans lequel la somme des monomères (b-A1) et (e-A1) est supérieure à 35 % en moles, par rapport à la somme de la totalité des diamines et de la totalité des acides dicarboxyliques se trouvant dans le polyamide (A1).

4. Mélange à mouler de polyamides selon l'une des revendications précédentes, **caractérisé en ce que** le polyamide transparent (A1) contient au moins 36 % en moles de monomères ayant des motifs structuraux aromatiques, par rapport à la quantité totale des diamines et des acides dicarboxyliques se trouvant dans le polyamide (A1).

5. Mélange à mouler de polyamides selon l'une des revendications précédentes, **caractérisé en ce que** le polyamide transparent (A2) est constitué des monomères suivants :

(a-A2) 20 à 100 % en moles de diamines cycloaliphatiques, par rapport à la quantité totale des diamines ;

(b-A2) 0 à 70 % en moles de diamines ayant des motifs structuraux aromatiques, par rapport à la quantité totale des diamines ;

(c-A2) 0 à 80 % en moles de diamines aliphatiques à chaîne ouverte, par rapport à la quantité totale des diamines ;

(d-A2) 20 à 100 % en moles d'acides dicarboxyliques aliphatiques à chaîne ouverte, par rapport à la quantité totale des acides dicarboxyliques ;

(e-A2) 0 à 70 % en moles d'acides dicarboxyliques aromatiques, par rapport à la quantité totale des acides dicarboxyliques ;

(f-A2) 0 à 70 % en moles d'acides dicarboxyliques cycloaliphatiques, par rapport à la quantité totale des acides dicarboxyliques ;

(g-A2) 0 à 40 % en poids de lactames et/ou d'acides aminocarboxyliques ayant 6 à 12 atomes de carbone, par rapport à la quantité totale des monomères (a-A2) à (g-A2) ;

dans lequel la somme des diamines (a-A2), (b-A2) et (c-A2) est de 100 % en moles ;

dans lequel la somme des acides dicarboxyliques (d-A2), (e-A2) et (f-A2) est de 100 % en moles ; et

la somme des monomères (b-A2) et (e-A2) est d'au plus 35 % en moles, par rapport à la somme de la totalité des diamines et de la totalité des acides dicarboxyliques se trouvant dans le polyamide (A2).

6. Mélange à mouler de polyamides selon l'une des revendications précédentes, **caractérisé en ce que** le polyamide transparent (A2) contient au plus 33 % en moles de monomères ayant des motifs structuraux aromatiques, par rapport à la quantité totale des diamines et des acides dicarboxyliques se trouvant dans le polyamide (A2).

7. Mélange à mouler de polyamides selon l'une des revendications précédentes, **caractérisé en ce que** les monomères ayant des motifs structuraux aromatiques pour les polyamides transparents (A1) et (A2) sont choisis dans le groupe consistant en l'acide téréphtalique, l'acide isophtalique, l'acide naphtalènedicarboxylique (NDA), les acides biphényledicarboxyliques, l'acide 1,5-anthracènedicarboxylique, l'acide p-terphénylène-4,4"-dicarboxylique et l'acide 2,5-pyridinedicarboxylique, la xylylènediamine et les mélanges de ceux-ci.

8. Mélange à mouler de polyamides selon l'une des revendications précédentes, **caractérisé en ce que**

la transparence, mesurée selon ASTM D1003 sur un objet moulé fabriqué à partir du mélange à mouler de polyamides (plaque de dimensions 60 x 60 x 2 mm), est d'au moins 80 % ; et/ou

le trouble, mesuré selon ASTM D1003 sur un objet moulé fabriqué à partir du mélange à mouler de polyamides (plaque de dimensions 60 x 60 x 2 mm), est au maximum de 40 % ; et/ou

un objet moulé fabriqué à partir du mélange à mouler de polyamides (plaque de dimensions 60 x 60 x 2 mm) présente une rugosité moyenne arithmétique Ra, déterminée selon DIN(EN ISO 4287 (2010-07) à l'aide d'une MarSurf XR1 Surface Measuring Station, d'au plus 0,12 $\mu$m, et/ou une profondeur totale de rugosité $R_z$ d'au plus 1,50 $\mu$m.

9. Mélange à mouler de polyamides selon l'une des revendications 4 à 8, **caractérisé en ce que**

les diamines cycloaliphatiques (a-A1) et/ou (a-A2) sont choisies dans le groupe consistant en le bis(4-amino-3-méthyl-cyclohexyl)-méthane, le bis(4-amino-cyclohexyl)-méthane, le bis(4-amino-3-éthyl-cyclohexyl)-méthane, le bis-4-amino-3,5-diméthyl-cyclohexyl)-méthane, la 2,6-norbornanediamine, le 1,3-diaminocyclohexane, le 1,4-diaminocyclohexane, l'isophoronediamine, le 1,3-bis(aminométhyl)cyclohexane, le 1,4-bis(aminométhyl)cyclohexane, le 2,2-(4,4'-diaminodicyclohexyl)propane et les mélanges de ceux-ci ;

et/ou

les diamines aromatiques (b-A1) et/ou (b-A2) sont choisies dans le groupe consistant en la xylylènediamine et les mélanges de celles-ci ;

et/ou

les diamines (c-A1) et/ou (c-A2) sont choisies dans le groupe consistant en la 1,4-butanediamine, la 1,5-pentanediamine, la 2-méthyl-1,5-pentanediamine, l'hexanediamine, la 2,2,4-triméthyl-1,6-hexaméthylènediamine, la 2,4,4-triméthyl-1,6-hexaméthylènediamine, la nonanediamine, la 2-méthyl-1,8-octanediamine, la 1,10-décanediamine, la 1,11-undécanediamine, la 1,12-dodécanediamine, la 1,13-tridécanediamine, la 1,14-tétradécanediamine, la 1,18-octadécanediamine, et les mélanges de celles-ci ;

et/ou

les acides dicarboxyliques aliphatiques (d-A1) et/ou (d-A2) sont choisis dans le groupe consistant en l'acide 1,6-hexanedioïque, l'acide 1,9-nonanedioïque, l'acide 1,10-décanedioïque, l'acide 1,11-undécanedioïque, l'acide 1,12-dodécanedioïque, l'acide 1,13-tridécanedioïque, l'acide 1,14-tétradécanedioïque, l'acide 1,16-hexadécanedioïque, l'acide 1,18-octadécanedioïque, et les mélanges de ceux-ci ;

et/ou

les acides dicarboxyliques aromatiques (e-A1) et/ou (e-A2) sont choisis dans le groupe consistant en l'acide téréphtalique, l'acide isophtalique, les acides naphtalènedicarboxyliques (NDA), les acides biphényledicarboxyliques, l'acide 1,5-anthracènedicarboxylique, l'acide p-terphénylène-4,4"-dicarboxylique et l'acide 2,5-pyridinedicarboxylique et les mélanges de ceux-ci ;

et/ou

les acides dicarboxyliques cycloaliphatiques (f-A1) et/ou (f-A2) sont choisis dans le groupe consistant en l'acide 1,3-cyclopentanedicarboxylique, l'acide 1,3-cyclohexanedicarboxylique, l'acide 1,4-cyclohexanedicarboxylique, l'acide 2,3-norbornanedicarboxylique, l'acide 2,6-norbornanedicarboxylique et les mélanges de ceux-ci ;

et/ou

le lactame et/ou les acides $\alpha,\omega$-aminocarboxyliques (g-A1) et/ou (g-A2) sont choisis dans le groupe consistant en l'acide m-aminobenzoïque, l'acide p-aminobenzoïque, le caprolactame (CL), l'acide $\alpha,\omega$-aminocaproïque, l'acide $\alpha,\omega$-aminoheptanoïque, l'acide $\alpha,\omega$-aminooctanoïque, l'acide $\alpha,\omega$-aminononanoïque, l'acide $\alpha,\omega$-aminodécanoïque, l'acide $\alpha,\omega$-aminoundécanoïque (AUA), le lauryllactame (LL) et l'acide $\alpha,\omega$-aminododécanoïque (ADA) et les mélanges de ceux-ci.

10. Mélange à mouler de polyamides selon l'une des revendications précédentes, **caractérisé en ce que** le polyamide (A1) est choisi dans le groupe consistant en PA MACMI/12, PA MACMI/1012, PA MACMT/12, PA MACMI/12, PA MACMI/MACMT, PA MACMI/MACMT/MACM12, PA 6I/6T/MACMI/MACMT, PA 6I/6T/MACMI/MACMT/12, PA 6I/MACMI, PA 6I/6T/PACMI/PACMT, PA 6I/612/MACMI/MACM12, PA 6T/612/MACMT/MACM12, PA 6I/6T/612/MACMI/MACMT/MACM12, PA 6I/6T/MACMI/MACMT/PACMI/PACMT, PA 6I/6T/MACMI/MACMT/PACMI/PACMT/12, PA MACMI/MACMT/MACM36, PA MACMI/MACM36, PA MACMT/MACM36, PA 12/PACMI, PA 12/MACMT, PA 6/PACMT, PA 6/PACMI, PA MXDI, PA MXDI/MXD6, PA MCDI/MXD10, PA MXDI/MXDT, PA MXDI/MACMI, PA MXDI/MXDT/MACMI/MACMT, PA 6I/6T/BACI/BACT, PA MACMI/MACMT/BACI/BACT, PA 6I/6T/MACMI/MACMT/BACI/BACT et les mélanges de ceux-ci, ces polyamides comportant plus de 35 % en moles de monomères ayant des motifs structuraux aromatiques, par rapport à la quantité totale des diamines et des acides dicarboxyliques, et/ou le polyamide (A2) est choisi dans le groupe consistant en PA MACM9, PA MACM10, PA MACM11, PA MACM12, PA MACM13, PA MACM14, PA MACM16, PA MACM18, PA MACM36, PA PACM9, PA PACM10, PA PACM11, PA PACM12, PA PACM13, PA PACM14, PA PACM16, PA PACM18, PA PACM36, PA TMDC9, PA TMDC10, PA TMDC11, PA TMDC12, PA TMDC13, PA TMDC14, PA TMDC15, PA TMDC16, PA TMDC17, PA TMDC18, PA TMDC36 ou les copolyamides tels que PA MACM10/1010, PA MACM10/PACM10, PA MACM12/1012, PA MACM14/1014, PA PACM10/1010, PA PACM12/1012, PA PACM14/1014, PA MACM12/PACM12, PA MACM14/PACM14, PA MACMI/MACMT/MACM12, PA 6I/612/MACMI/MACM12, PA 6T/612/MACMT/MACM12, PA 6I/6T/612/MACMI/MACMT/MACM12, PA MACMI/MACMT/MACM36, PA MACMI/MACM36, PA MACMT/MACM36, PA MACMI/MACM12, PA MACMT/MACM12, PA MACMI/MACMT/10I/10T/1012, PA 6I/6T/612/PACMI/PACMT/PACM12, PA 6I/612/MACMI/MACM12, PA 6T/612/MACMT/MACM12, PA 10T/1012/MACMT/MACM12, PA 10I/1012/MACMI/MACM12, PA 6I/6T/MACMI/MACMT/PACMI/PACMT/MACM12/PACM12, PA MACMI/PACMI/MACM12/PACM12, PA MACMT/PACMT/MACM12/PACM12, PA MACMI/PACMT/MACM12/PACM12, PA MACMI/MACM36, PA MACMI/MACMT/MaCM36, PA 1012/MACMI, PA 1012/MACMT, 1010/MACMI, PA 1010/MACMT, PA 612/MACMT, PA 610/MACMT, PA 612/MACMI, PA 610/MACMI, PA 1012/PACMI, PA 1012/PACMT, PA 1010/PACMI, PA 1010/PACMT, PA 612/PACMT, PA 612/PACMI, PA 610/PACMT, PA 610/PACMI et les mélanges de ceux-ci ; ces polyamides comportant au plus 35 % en moles de monomères ayant des motifs structuraux aromatiques, par rapport à la quantité totale des diamines et des acides dicarboxyliques.

11. Mélange à mouler de polyamides selon l'une des revendications précédentes, **caractérisé en ce que** l'au moins une charge de verre (B) est choisie dans le groupe consistant en les fibres de verre, les fibres de verre broyées, les particules de verre, les flocons de verre, les billes de verre, les billes creuses de verre et les combinaisons de celles-ci.

12. Mélange à mouler de polyamides selon l'une des revendications précédentes, **caractérisé en ce que** le type de verre de l'au moins une charge de verre (B) est choisi dans le groupe consistant en le verre E, le verre ECR, le verre R et le verre AR.

13. Mélange à mouler de polyamides selon l'une des revendications précédentes, **caractérisé en ce que** l'au moins un additif (C) est choisi dans le groupe consistant en les stabilisants inorganiques et organiques, moins de 5 % en poids, par rapport au poids total du mélange à mouler de polyamides, de polyamides partiellement cristallins, les modifiants choc, les lubrifiants, les colorants, les agents de marquage, les agents photochromes, les agents de démoulage, les catalyseurs de condensation, les régulateurs de chaîne, les antimoussants, les agents anti-adhérence de contact, les agents d'ignifugation non halogénés, les phyllosilicates naturels, les phyllosilicates synthétiques, les charges nanométriques ayant une granulométrie au maximum de 100 nm, et les mélanges de ceux-ci.

14. Mélange à mouler de polyamides selon l'une des revendications précédentes, **caractérisé en ce que**
la proportion du composant (A) dans le mélange à mouler de polyamides est comprise dans la plage de 55 à 90 % en poids par rapport à la somme des composants (A) à (C), et/ou
la proportion du composant (B) dans le mélange à mouler de polyamides est comprise dans la plage de 10 à 40 % en poids par rapport à la somme des composants (A) à (C), et/ou
la proportion du composant (C) dans le mélange à mouler de polyamides est comprise dans la plage de 0 à 7 % en poids par rapport à la somme des composants (A) à (C), et/ou
le mélange à mouler de polyamides ne contient pas de constituants autres que les composants (A) à (C).

15. Mélange à mouler de polyamides selon l'une des revendications précédentes, **caractérisé en ce que**
le composant (A1) présente une température de transition vitreuse, déterminée selon ISO 11357-2, d'au moins 135 °C ; et/ou
le composant (A2) présente une température de transition vitreuse, déterminée selon ISO 11357-2, d'au moins 135 °C ; et/ou
le mélange (A) présente une température de transition vitreuse, déterminée selon ISO 11357-2, d'au moins 130 °C ; et/ou
le mélange à mouler de polyamides présente une température de transition vitreuse, déterminée selon ISO 11357-2, d'au moins 130 °C.

16. Objet moulé contenant un mélange à mouler de polyamides selon l'une des revendications 1 à 15, ou en étant constitué.

17. Objet moulé selon la revendication 16, **caractérisé en ce qu'**il s'agit d'un objet moulé multicouches.

18. Objet moulé selon l'une des revendications 17, **caractérisé en ce qu'**il s'agit d'un objet moulé multicouches, formé d'une couche (S1) contenant un mélange à mouler de polyamides selon l'une des revendications 1 à 16 et d'au moins une couche supplémentaire (S2), (S3) ou (S4), qui est exempte de charge de verre (B) ou qui présente une proportion de charge de verre (B) réduite par comparaison avec celle de la couche (S1).

**IN DER BESCHREIBUNG AUFGEFÜHRTE DOKUMENTE**

**In der Beschreibung aufgeführte Patentdokumente**

- EP 2169008 A1
- WO 2015132510 A1

**In der Beschreibung aufgeführte Nicht-Patentliteratur**

- *CHEMICAL ABSTRACTS,* 6864-37-5
- *CHEMICAL ABSTRACTS,* 1761-71-3
- *CHEMICAL ABSTRACTS,* 65962-45-0
- *CHEMICAL ABSTRACTS,* 100-21-0
- *CHEMICAL ABSTRACTS,* 121-95-5
- *CHEMICAL ABSTRACTS,* 2549-93-1